(19) Europäisches Patentamt
European Patent Office
Office européen des brevets

(11) EP 1 547 793 A1

(12) # EUROPEAN PATENT APPLICATION
published in accordance with Art. 158(3) EPC

(43) Date of publication:
**29.06.2005 Bulletin 2005/26**

(21) Application number: **03730567.9**

(22) Date of filing: **22.05.2003**

(51) Int Cl.[7]: **B41M 5/00**, C09D 11/00, B41J 2/01

(86) International application number:
**PCT/JP2003/006380**

(87) International publication number:
**WO 2003/097371 (27.11.2003 Gazette 2003/48)**

(84) Designated Contracting States:
**AT BE BG CH CY CZ DE DK EE ES FI FR GB GR HU IE IT LI LU MC NL PT RO SE SI SK TR**

(30) Priority: **22.05.2002 JP 2002148042**
**20.08.2002 JP 2002238731**

(71) Applicant: **Ricoh Company, Ltd.**
**Tokyo 143-8555 (JP)**

(72) Inventors:
- **ADACHI, Hiroshi,**
**Nakayamaminami Park Homes 504**
**Yokohama-shi, Kanagawa 226-0013 (JP)**
- **FURUKAWA, Juichi**
**Atsugi-shi, Kanagawa 243-0012 (JP)**

(74) Representative: **Barz, Peter et al**
**Patentanwalt**
**Kaiserplatz 2**
**80803 München (DE)**

(54) **PROCESSING LIQUID FOR INK JET RECORDING, INK SET, CARTRIDGE HAVING THESE CHARGED THEREIN, METHOD OF FORMING INK JET RECORDING IMAGE THEREWITH AND IMAGE FORMING APPARATUS**

(57) Disclosed is a processing liquid for ink-jet recording that can produce clear as well as glossy images without occurrences of feathering even when printing is carried out on plain paper, and also that can afford high reliability without occurrences of clogging of ink-jet nozzles due to drying even when the processing liquid is allowed to stand for a long period; also disclosed are an ink set of the processing liquid and ink, and a cartridge containing the ink set, and, an image forming process and an image forming apparatus for ink-jet recording that utilize the processing liquid, ink set, and cartridge.

The processing liquid for ink-jet recording according to the present invention comprises fine particles that react with a coloring material when the processing liquid contacts with a recording liquid that comprises the coloring material and water, and a water-soluble organic solvent having a boiling point of 210 °C or more,

wherein the content (a wt %) of fine particles and the content (b wt %) of the water-soluble organic solvent having a boiling point of 210 °C or more satisfy the following relation: $10 \leq a < 40$, $b/a > 1.50$;

wherein the content (a) and content (b) are expressed by weight ratio based on the total amount of processing liquid (wt %).

FIG. 1

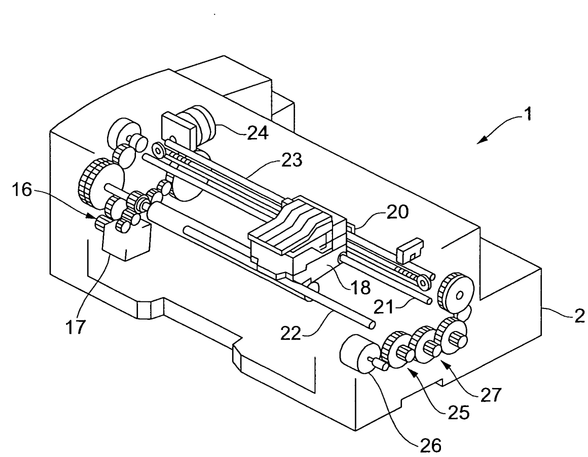


EP 1 547 793 A1

## Description

Technical Field

The present invention relates to the technical field of ink-jet recording, in particular to an ink set characterized in combination of a processing liquid containing fine particles and a recording liquid containing coloring material coated with resin, the specific processing liquid for the ink set, the specific recording liquid for the ink set, an ink-jet recording process and an apparatus for forming images based on applying the processing liquid and the recording liquid on a recording medium , a cartridge containing the processing liquid and the recording liquid, and ink-jet recorded matter produced by the ink-jet recording apparatus.

Background Art

Ink-jet recording processes, in which droplets of ink are sprayed to record an image, have a simple printing mechanism and therefore are advantageous in that the cost is low, the apparatuses are compact, and the noise is low.

However, when such ink-jet recording processes are combined with certain recording media, image defects such as bleeding of letters (hereinafter referred to as "feathering") tend to occur, particularly such a problem appears that image quality is likely to degrade in plain paper.

In order to address such a problem, some processes are proposed in which a processing liquid, which contains a component that forms flocculates with a coloring material in recording liquid, is utilized along with the recording liquid. Japanese Patent (JP-B) No. 2667401 discloses a colorless or pale color liquid that contains a compound having two or more cationic groups per one molecule. Japanese Patent Application Laid-Open No. 8-81611 discloses a liquid composition containing polyallylamine and glycerin.

However, in these processes, since the reactive component of polymer is incorporated in dissolved condition as described, much additive amount leads to viscosity increase, resulting in inferior ejection from the recording head. Therefore, the content of reactive component should be lowered; thereby the effect on reducing the feathering is also lowered since the viscosity change due to reaction with the coloring material is suppressed.

JP-B No. 2675001 discloses a colorless or pale color liquid that contains polyvalent metal salt. JP-B No. 2711098 discloses a colorless or pale color liquid that contains quaternary ammonium salt or amine salt. JP-B No. 3026487 discloses a colorless or pale color liquid that contains quaternary ammonium salt or amine salt, and polyvalent alcohol.

However, the polyvalent metal salts and amine compounds hardly form larger flocculates through the reaction with the coloring material since the size of one molecule is relatively small, although the polyvalent metal salts and amine compounds described can be added in a larger amount. Therefore, the effect on reducing the feathering is little since the viscosity change is not significant even if the reaction with coloring material progresses.

In order to further improve the image quality, a process is proposed in which a processing liquid containing fine particles is utilized for forming flocculates with coloring material in the recording liquid.

International Publication No. WO00/06390 discloses a reactant liquid that comprises cationic emulsion containing sites having UV-ray absorbing and/or optical stabilizing performance. JP-A No. 6-92010 discloses a solution containing fine particles, or fine particles and binder polymer. JP-A No. 11-228890 discloses a substantially colorless composition containing colloid of anionic metal oxide. JP-A No. 2000-34432 discloses a liquid composition that comprises pale color or white water-insoluble fine particles, a water-soluble organic solvent, and water.

JP-A No. 2001-171095 discloses a translucent white ink composition base on inorganic oxide pigment. JP-A No. 2001-199149 discloses a liquid composition that contains fine particles having reactivity with a coloring material. JP-A Nos. 2001-199150 and 2001-199151 disclose a liquid composition that contains fine particles, of which the surface is charged in reverse polarity with ink, in dispersed condition.

These liquids, which can contain the fine particles, also can involve reactive fine particles in dispersed condition; therefore, may contain relatively large amount of reactive components while suppressing the increase of liquid viscosity, compared to the processing liquids that dissolve polymer as described. Further, since the fine particles are inherently of large particle size compared to polyvalent metal salts, larger flocculates tends to yield when the dispersion is destroyed due to the reaction with the coloring material. As a result, the viscosity increases significantly thereby the fluidity of the coloring material is depressed; therefore, remarkable effect may be achieved on enhancing image quality such as improving the feathering.

On the contrary, dispersions containing larger amount of fine particles tend to deposit fine particles due to moisture evaporation. The occurrence of deposition may bring about nozzle clogging, often resulting in serious image defects. However, any disclosures or proposals described above do not refer to controlling the nozzle clogging.

As such, the way has not been proposed yet that satisfies reducing feathering as well as controlling nozzle clogging due to deposition of a processing liquid component.

Further, in recent years, there exist needs to overcome the deficiency of high quality with respect to images formed by ink-jet recording processes, in particular, images with high gloss are demanded; however, the solution to meet the demand has not been proposed yet.

Disclosure of Invention

An object of the present invention is to provide a processing liquid for ink-jet recording that can produce clear as well as glossy images without occurrences of feathering even when printing is carried out on plain paper, and also that can afford high reliability without occurrences of clogging of ink-jet nozzles due to drying even when the processing liquid is allowed to stand for a long period; an ink set of the processing liquid and ink, and a cartridge containing the ink set, and, an image forming process and an image forming apparatus for ink-jet recording that utilize the processing liquid, ink set, and cartridge.

The means to achieve the above noted objects are as follows:

< 1 > A processing liquid for ink-jet recording comprising:

fine particles that react with a coloring material when the processing liquid contacts with a recording liquid that comprises the coloring material and water, and
a water-soluble organic solvent having a boiling point of 210 °C or more,

wherein the content (a wt %) of fine particles and the content (b wt %) of the water-soluble organic solvent having a boiling point of 210 °C or more satisfy the following relation:

$$10 \leq a < 40, b/a > 1.50.$$

(wherein the content (a) and content (b) are expressed by weight ratio based on the total amount of processing liquid (wt %))
< 2 > The processing liquid for ink-jet recording according to < 1 >,
wherein the content (a wt %) and the content (b wt %) satisfy the following relation:

$$15 \leq a < 40, b/a > 1.50.$$

< 3 > The processing liquid for ink-jet recording according to < 1 >,
wherein the fine particles are inorganic fine particles.
< 4 > The processing liquid for ink-jet recording according to < 3 >,
wherein the inorganic fine particles are cationic colloidal silica.
< 5 > The processing liquid for ink-jet recording according to claim < 1 >,
wherein the water-soluble organic solvent is at least one compound selected from the group consisting of 2-pyrrolidone, diethylene glycol, triethylene glycol, glycerin, 3-methylpentane-1,3,5-triol, and 2-ethyl-2-(hydroxymethyl)-1,3-propanediol.
< 6 > The processing liquid for ink-jet recording according to < 1 >,
wherein the processing liquid comprises at least two water-soluble organic solvents having a boiling point of 210 °C or more.
< 7 > The processing liquid for ink-jet recording according to < 1 >,
wherein the processing liquid comprises a surfactant.
< 8 > The processing liquid for ink-jet recording according to < 7 >,
wherein the surfactant is a cationic compound.
< 9 > The processing liquid for ink-jet recording according to < 1 >,
wherein the processing liquid comprises an antiseptic-antimildew agent.
< 10 > An ink set for ink-jet recording comprising:

a recording liquid that contains a coloring material and water, and
a processing liquid for ink-jet recording that contains fine particles reactive with the coloring material when the processing liquid contacts with the recording liquid, and a water-soluble organic solvent having a boiling point of 210 °C or more,

wherein the content (a wt %) of fine particles and the content (b wt %) of the water-soluble organic solvent having a boiling point of 210 °C or more satisfy the following relation:

$$10 \leq a < 40,\ b/a > 1.50.$$

(wherein the content (a) and content (b) are expressed by weight ratio based on the total amount of processing liquid (wt %))

< 11 > The ink set for ink-jet recording according to < 10 >, wherein the coloring material is at least one of pigments and dyes.

< 12 > The ink set for inkjet recording according to < 11 >, wherein the coloring material is one of pigments.

< 13 > The ink set for ink-jet recording according to < 10 >, wherein the fine particles are cationic and the coloring material is anionic.

< 14 > The ink set for ink-jet recording according to < 10 > to < 13 >,
wherein the recording liquid comprises a water-soluble organic solvent.

< 15 > The ink set for ink-jet recording according to < 10 > to < 14 >,
wherein the recording liquid comprises a surfactant.

< 16 > The ink set for ink-jet recording according to < 10 > to < 15 >,
wherein the recording liquid comprises an antiseptic-antimildew agent.

< 17 > An image forming process for ink-jet recording comprising:

applying a recording liquid that contains a coloring material and water to a recording medium,
applying a processing liquid for ink-jet recording to the recording medium, and,
making contact the recording liquid and the processing liquid on the recording medium to form an image,

wherein the processing liquid contains fine particles reactive with the coloring material when the processing liquid contacts with the recording liquid, and a water-soluble organic solvent having a boiling point of 210 °C or more, and

wherein the content (a wt %) of fine particles and the content (b wt %) of the water-soluble organic solvent having a boiling point of 210 °C or more satisfy the following relation:

$$10 \leq a < 40,\ b/a > 1.50.$$

(wherein the content (a) and content (b) are expressed by weight ratio based on the total amount of processing liquid (wt %))

< 18 > Recorded matter comprising an image formed by means of ink,

wherein the ink is flocculated through contacting a recording liquid and a processing liquid for ink-jet recording,

the recording liquid comprises a coloring material and water,

the processing liquid for ink-jet recording comprises fine particles that react with the coloring material when the processing liquid contacts with the recording liquid, and a water-soluble organic solvent having a boiling point of 210 °C or more, and

the content (a wt %) of fine particles and the content (b wt %) of the water-soluble organic solvent having a boiling point of 210 °C or more satisfy the following relation:

$$10 \leq a < 40,\ b/a > 1.50.$$

< 19> A cartridge for ink-jet recording, comprising a processing liquid,

wherein the processing liquid comprises fine particles that react with a coloring material when the processing liquid contacts with a recording liquid that comprises the coloring material and water, and a water-soluble organic solvent having a boiling point of 210 °C or more, and

wherein the content (a wt %) of fine particles and the content (b wt %) of the water-soluble organic solvent having a boiling point of 210 °C or more satisfy the following relation:

$$10 \leq a < 40,\ b/a > 1.50.$$

< 20 > A cartridge set for ink-jet recording, comprising a recording liquid cartridge and a processing liquid cartridge in combination,

wherein the recording liquid cartridge contains a recording liquid comprising a coloring material and water, and the processing liquid cartridge contains a processing liquid comprising fine particles that react with the coloring material when the processing liquid contacts with the recording liquid and a water-soluble organic solvent having a boiling point of 210 °C or more, and

the content (a wt %) of fine particles and the content (b wt %) of the water-soluble organic solvent having a boiling point of 210 °C or more satisfy the following relation:

$$10 \leq a < 40, b/a > 1.50.$$

< 21 > An image forming apparatus for ink-jet recording, comprising a recording liquid cartridge and a processing liquid cartridge,

wherein the recording liquid cartridge contains a recording liquid comprising a coloring material and water, and the processing liquid cartridge contains a processing liquid comprising fine particles that react with the coloring material when the processing liquid contacts with the recording liquid and a water-soluble organic solvent having a boiling point of 210 °C or more,

the content (a wt %) of fine particles and the content (b wt %) of the water-soluble organic solvent having a boiling point of 210 °C or more satisfy the following relation:

$$10 \leq a < 40, b/a > 1.50$$

wherein the image forming apparatus is further equipped with an ejecting device configured to apply the recording liquid to a recording medium by communicating with the recording cartridge, and an ejecting device configured to apply the processing liquid to the recording medium by communicating with the processing cartridge, and an image is formed through contacting the recording liquid and the processing liquid on the recording medium.

Brief Description of Drawings

FIG. 1 shows an exemplary image forming apparatus according to the present invention.
FIG. 2 shows an exemplary recording head adapted to the present invention.
FIG. 3 shows another exemplary recording head adapted to the present invention.
FIG. 4 shows an external perspective view of a cartridge according to the present invention prior to mounting to a recording apparatus.
FIG. 5 shows a cross-sectional front view of a cartridge according to the present invention.

Best Mode for Carrying Out the Invention

The present invention will be explained in detail in the following, but the explanations are not to be construed as limiting the present invention.

The inventive processing liquid for ink-jet recording comprises fine particles reactive with a coloring material, and a water-soluble organic solvent having a boiling point of 210°C or more, in the following conditions:

$$10 \leq a < 40$$

$$b/a > 1.50$$

a: content of fine particles in the processing liquid (wt %)
b: content of water-soluble organic solvent having a boiling point of 210 °C or more in the processing liquid (wt %)

The content of fine particles (a) in the processing liquid, and the content of water-soluble organic solvent (b) having a boiling point of 210 °C or more in the processing liquid are expressed by weight percentage (wt %) base on

the total amount of the processing liquid.

The fine particles are dispersed in a dispersion condition bearing a charge; therefore, the fine particles may form a dispersion phase stably owing to electrical repulsive force acting on the fine particles each other; reactive component(s) may be added at larger amount into the inventive processing liquid for ink-jet recording, while suppressing viscosity increase owing to the dispersed condition, compared to conventional solutions of uniform condition.

When the recording liquid contacts with the processing liquid for ink-jet recording, coloring material in the recording liquid and the fine particles react each other. At the same time, the charge of fine particles is neutralized and the repulsive force decreases; consequently, the dispersion turns into unstable and then flocculates are formed. The inventive processing liquid may contain a large amount of reactive component and the reactive component is dispersed as inherently large particles; therefore, when the inventive processing liquid is combined with the recording liquid, remarkable viscosity change is induced since larger flocculates are formed instantly. Such remarkable viscosity change leads to preventing the flow-out of the recording liquid, thereby the feathering may be improved.

The content of fine particles (a) brings about remarkable viscosity change in a range of 10 wt % or more, thus the feathering may be significantly improved. The content of fine particles (a) of less than 40 wt % results in the remarkable effect. On the other hand, the content of fine particles (a) of less than 10 wt % cannot prevent the flow-out of the recording liquid since the viscosity change is slower and less; therefore the feathering cannot be significantly improved. Whereas, the content of fine particles (a) of more than 40 wt % results in lower stability of the recording liquid, tends to cause gelation and clogging of the head, therefore, resulting in image defects due to non-ejection of the processing liquid.

On the other hand, in the case of the processing liquid that dissolves polymer(s), larger additive amount of reactive component(s) results in excessively high liquid viscosity even prior to contacting with the recording liquid, thereby leading to impossible ejection from the ink-jet head; accordingly, the additive amount of reactive component (s) should be decreased. When the additive amount of reactive component(s) is decreased, combining with the recording liquid cannot bring about remarkable viscosity change due to less amount of reactive species. As a result, flow-out of the recording liquid occurs and the feathering tends to occur.

Further, in the case of the processing liquid that dissolves lower molecular component(s) such as polyvalent metal salt(s) and amine salt(s), larger additive amount does not result in remarkable viscosity change, and also remarkable viscosity increase is not likely to occur since larger flocculates hardly generate when combined with coloring material(s). As a result, flow-out of the recording liquid occurs and the feathering also tends to occur.

Further, in the dispersion liquid containing larger amount of fine particles in dispersed condition, the fine particles tend to deposit due to degradation of the dispersed condition when volatile component(s) in vehicle evaporates and the concentration of the fine particles increases. When the volatile component evaporates beyond a certain level, the fine particles tend to deposit, which causes the nozzle clogging of the ink-jet head. However, in the processing liquid according to the present invention, the flowability may be assured without the deposition of fine particles, since sufficient amount of vehicle, which has high compatibility with fine particles, remains even when the volatile component has evaporated, owing to incorporating water-soluble organic solvent having a boiling point of 210 °C or more in an amount of 1.5 times more than the amount of the fine particles. As such, the occurrence of nozzle flogging due to drying may be avoided even after prolonged storage.

Preferably, the processing liquid according to the present invention comprises fine particles reactive with a coloring material, and a water-soluble organic solvent having a boiling point of 210 °C or more, in the following conditions:

$$15 \leq a < 40$$

$$b/a > 1.50$$

a: content of fine particles in the processing liquid (wt %)
b: content of water-soluble organic solvent having a boiling point of 210 °C or more in the processing liquid (wt %)

When the processing liquid contacts with the recording liquid, the coloring material in the recording liquid and the fine particles react each other, thus the dispersion turns into unstable, and flocculates tends to yield. The mixed liquid of the processing liquid and the recording liquid may infiltrate into recording paper, whereas flocculates build up between fibers of the recording paper to form a layer of flocculates. When the content of the fine particles in the processing liquid is 15 wt % or more, the fine particles tend to flocculate due to mutual contacts since the space between the fine particles is relatively short, thus larger flocculates are likely to generate rapidly. The larger flocculates easily clog fiber spaces and build up on surface layer of the recording paper, thus the flocculate layer is formed thick on the

surface of the recording paper, covering over the surface of the recording paper. When the surface of the recording paper is covered as such, smoother surface may be formed on the surface of the recording paper compared to the original fiber assembly to generate glossy appearance, thereby printed matter of higher quality may be formed. Particularly, in the printed matter such as photography image, color saturation may be enhanced and clear images may generate since irregular reflection of light is reduced at the surface of the recording paper. Needless to say, the content of fine particles (a) of 15 wt % or more may result in more significant effect on reducing the feathering aforesaid. That is, the content of fine particles (a) of 15 wt % or more is preferred since flocculates form in rapid velocity, the layer thickness is sufficient, smoother surface may be formed sufficiently on the surface of the recording paper, and leading to glossy appearance. Particularly, clear images may be obtained in color images owing to the increased color saturation.

In this aspect also, the flowability may be assured without the deposition of fine particles, since sufficient amount of vehicle, which has high compatibility with fine particles, remains even when the volatile component has evaporated, owing to incorporating water-soluble organic solvent having a boiling point of 210°C or more in an amount of 1.5 times more than the amount of the fine particles. As such, the occurrence of nozzle flogging due to drying may be avoided even after prolonged storage.

Further, the processing liquid according to the present invention may contain two sorts or more of water-soluble organic solvents each having a boiling point of 210 °C or more. Incorporation of two sorts or more of water-soluble organic solvents each having a boiling point of 210 °C or more may lead to stabilization of liquid properties with time. When only one sort of water-soluble organic solvent having a boiling point of 210°C or more is incorporated, fine particles may flocculate due to freezing during storage period at lower temperature, alternatively fine particles may flocculate due to unstable dispersion derived from compatibility during storage period at higher temperature. Incorporation of two sorts or more of water-soluble organic solvents each having a boiling point of 210 °C or more may bring about compensating their properties mutually, thus resulting in improving the dispersion stability against the environmental changes, and clogging due to flocculation may be effectively prevented.

The reaction between the fine particles and the coloring material means an action working between the fine particles and the coloring material, which may be classified into physical action such as electrostatic force, Van der Waals force, magnetic force and the like, and chemical action that alters bonding condition such as covalent bond and ionic bond through changing electronic conditions. The reaction may be caused through an existence of a third substance or by action of external energy such as irradiation and heat.

The reaction between the fine particles and the coloring material by action of electrostatic force is considered as following, but the considerations are not to be construed as limiting the present invention.

The fine particles incorporated in the processing liquid according to the present invention bear charge on the particle surface, and the dispersion is stabilized owing to repulsive action of the respective fine particles by the surface charge. When the recording liquid, containing coloring material that has reverse polarity with the fine particles, contact with the processing liquid containing the fine particles, the coloring material absorbs more strongly to the fine particles. At the same time, since the surface charge of the fine particles is neutralized by the charge of the coloring material, the repulsive action of mutual fine particles disappears and the fine particles and the coloring material form larger flocculates. Further, since water-soluble groups of the coloring material such as carbonic and sulfonic groups are concealed by the fine particles at absorbing, the solubility of the flocculates against water decreases rapidly, thus the flocculates enlarge further. When the flocculates form rapidly, the flocculates are trapped at porous portions of recording medium when the recording liquid and the processing liquid are infiltrating into the recording medium, the coloring material comes to hardly move, thus the feathering and color bleeding may be effectively prevented.

Further, when fine particles and coloring material form particulate flocculates and they stack at near the surface of the recording medium like a stonewall, an infiltrating film may be formed. As a result, in addition that color bleeding may be improved since the vehicle infiltrates promptly into the recording medium, drying ability may be improved. When polymer is employed so as to react with the coloring material in stead of fine particles, the polymer forms a film on the surface of the recording medium, which inhibits the infiltration of vehicle. As a result, the drying ability is decreased, thus attaching the recorded matter after printing causes adhesion of ink on a hand or image smears are induced.

Further, flocculates of cationic fine particles and anionic coloring material stack near the surface of the recording medium , which results in higher image density.

Further, since bleeding of ink to the back side of the recording medium may be controlled, printing on both sides may be appropriately performed.

Further, since the water-soluble groups of the anionic coloring material such as carbonic and sulfonic groups are concealed by the cationic fine particles, the solubility of the flocculates against water decreases rapidly, thus water resistance may be improved.

Application of the processing liquid according to the present invention to an image forming process will be explained.

The processing liquid is contained in a cartridge, and is communicated to an applying unit such as an ink-head and a coating roller that communicate to the cartridge. Two liquids of the processing liquid and the recording liquid are applied to the recording medium by means of the applying unit. With respect to the application order of the two liquids, any one liquid may be applied initially; any one liquid may be dividedly applied in two or more times. In this connection, the way will be explained that the processing liquid is initially applied to the recording medium by means of an ink-jet head.

After applying the processing liquid to the recording medium by means of an ink-jet head, the recording liquid is applied in such a distance to make the two liquid contact each other, for example, the recording ink overlaps on the processing liquid, or the recording ink spread over the recording medium.

When two liquids contact each other, it is considered that the dispersion of the fine particles degrades in the processing liquid as described above, flocculates of fine particles generate, the surface of fine particles absorbs the coloring material and the coloring material is entrapped into the inside of the flocculates during the formation of the flocculates.

Through such processes, the viscosity of the mixed liquid increases, the fluidity of the coloring material decreases, and the flocculates enlarge. As a result, the flocculates stay between fibers of the recording medium, the flow-out of the coloring material is prevented, thereby clear images without feathering may be formed.

The present invention will be explained specifically in the following.

The processing liquid comprises fine particles that are reactive with coloring material in recording liquid. The fine particles may be organic fine particles, inorganic fine particles, or combined particles of organic and inorganic. The shape of the respective particles is not particularly defined, may be spherical, particle chain, undefined, or the like.

Examples of the organic fine particles include fine particles of polystyrenes, styrene-acrylic copolymers, poly (methyl methacrylate)s, melamine resins, epoxy resins, silicone resins, benzoguanamine resins, polyamide resins, fluorine-containing resins, and polymers prepared by emulsion polymerization of $\alpha,\beta$-unsaturated ethylenic monomers.

The inorganic fine particles may be broadly classified into inorganic salts such as calcium carbonate and inorganic oxides such as silica ($SiO_2$).

Examples of the inorganic salts include, but are not limited to, calcium carbonate, calcium nitrate, calcium chloride, calcium sulfate, aluminum nitrate, aluminum chloride, aluminum sulfate and iron sulfate. In an aqueous processing liquid, calcium carbonate, calcium nitrate, iron sulfate or other inorganic fine particles having a low solubility in water are preferably used for better dispersion. These are preferably subjected to cationization for further higher adsorptivity and aggregation property. The modification by an ionic agent may be carried out by a known process, which includes, but is not limited thereto, for example, JP-A No. 10-129113, JP-A No. 11-20301.

Specific examples of the inorganic oxide include, silica ($SiO_2$), cationized compound of silica, titanium dioxide, alumina ($Al_2O_3$), zirconia and the like, but are not limited thereto.

Among the inorganic fine particles, cationic silica is particularly preferable in terms of reactivity. The cationic silica may be treated by cationization on the surface of silica. For the cationization, a cationic compound is chemically and physically introduced to the surface of the silica. For example, the surface can be chemically cationized by coupling silanol groups of silica with an amino compound or treating silica with an amino compound. The surface can be physically cationized by mixing silica with a cationic compound in a solvent to allow the silica to physically adsorb the cationic compound and removing the solvent. Concrete examples of the anionic silica used as a core material include ST-ZL, ST-20, ST-30, ST-40, ST-C, ST-N, ST-O, ST-S, ST-50, ST-20L, ST-OL, ST-XS, ST-YL, ST-XL, ST-UP and ST-OUP (trade names, available from Nissan Chemical Industries, Ltd.), Cataloid SI-350 and SI-500 (trade names, available from Du Pont Company), Nipgel AY-220, AY-420 and AY-460(trade names, available from Tosoh Silica Corporation). However, the present invention is not limited thereto and any silica treated with cation on the surface may suitably used.

The inorganic fine particles are also commercially available, for example, as cationized silica under the trade name of ST-AK from Nissan Chemical Industries, Ltd.; as alumina under the trade names of Alumina Sol 100, 200 and 520 from Nissan Chemical Industries, Ltd.; as titanium oxide under trade names of Titania Series from Idemitsu Kosan Co., Ltd. Some of these fine particles are available as aqueous dispersions.

The fine particles in the present invention may be cationic inorganic-organic composite particles or particulate cationic inorganic-organic composite particles.

The cationic inorganic-organic composite fine particles may be obtained by adsorbing a cationic organic compound on the surface of an inorganic particle, or by adsorbing a cationic inorganic compound on the surface of an organic compound. For example, the inorganic-organic composite fine particles coated with a cationic polymer may be obtained by dispersing inorganic particles in a solvent such as water and slowly adding cationic polymer in aqueous solution or aqueous organic solvent.

Examples of the cationic polymer include polyallylamines, polyvinylamines, polyimines, polyvinylpyrrolidones, polyethyleneimines, polyvinylpyridines, aminoacetalated poly(vinyl alcohol)s, ionene polymers, polyvinylimidazoles, poly(vinylbenzyl phosphonium)s, polyalkylarylammonium, polyamidines, polyaminesulfones, cationic starch and other cationic polymeric compounds.

The added amount of the fine particles is preferably 10 wt% or more based on the processing liquid, more

preferably is 15 wt % or more from the viewpoint of enhanced gloss level. When the content is 10 wt % or less, the improving effect of the image quality is not sufficient. Also, plural types of fine particles may be used in combination.

The processing liquid comprise water-soluble organic solvent(s) having a boiling point of 210 °C or more in order to prevent the nozzle clogging due to drying; a water-soluble organic solvent having a boiling point of no more than 210 °C may be employed together with. The values of boiling point can be found in Material Safety Data Sheet (MSDS) from manufacturer of chemical products, technical books such as Solvent Handbook (by Kodansha Ltd.). Water-soluble organic solvents include humectants and wetting agents.

Examples of the humectants include ethylene glycol, diethylene glycol, triethylene glycol, tetraethylene glycol, polyethylene glycol, propylene glycol, 1,3-butanediol, 1,3-propanediol, 2-methyl-1,3-propanediol, 1,4-butanediol, 1,5-pentanediol, 1,6-hexanediol, glycerol, 1,2,6-hexanetriol, 2-ethyl-1,3-hexanediol, 1,2,4-butanetriol, 1,2,3-butanetriol, petriol (3-methyl-1,3,5-pentanetriol) and other polyhydric alcohols; ethylene glycol monoethyl ether, ethylene glycol monobutyl ether, diethylene glycol monomethyl ether, diethylene glycol monoethyl ether, diethylene glycol monobutyl ether, triethylene glycol monobutyl ether, tetraethylene glycol monomethyl ether, propylene glycol monoethyl ether and other polyhydric alcohol alkyl etehrs; ethylene glycol monopenyl ether, ethylene glycol monobenzyl ether and other polyhydric alcohol aryl ethers; N-methyl-2-pyrrolidone, N-hydroxyethyl-2-pyrrolidone, 2-pyrrolidone, 1,3-dimethylimidazolidinone, ε-caprolactam and other nitrogen-containing heterocyclic compounds; formamide, N-methylformamide, N,N-dimethylformamide and other amides; monoethanolamine, diethanolamine, triethanolamine, monoethylamine, diethylamine, triethylamine and other amines; dimethyl sulfoxide, sulfolane, thiodiethanol and other sulfur-containing compounds; propylene carbonate, ethylene carbonate, and γ-butyrolactone. With water, each of these solvents can be used alone or in combination.

The wetting agents are added for enhancing wettability between the processing liquid and the recording medium and controlling the penetrating velocity. Compounds represented by following Formulas (I), (II), (III) and (IV) are preferred as the wetting agent. More specifically, polyoxyethylene alkylphenyl ether surfactants of Formula (I), acetylene glycol surfactants of Formula (II), polyoxyethylene alkyl ether surfactants of Formula (III), and polyoxyethylene polyoxypropylene alkyl ether surfactants of Formula (IV) can reduce the surface tension of the processing liquid and improve the wettability to thereby increase the penetration velocity.

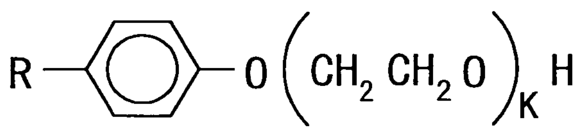

· · · (I)

In Formula (I), "R" represents a hydrocarbon chain that may be branched having 6 to 14 carbon atoms; and "k" represents an integer of 5 to 20.

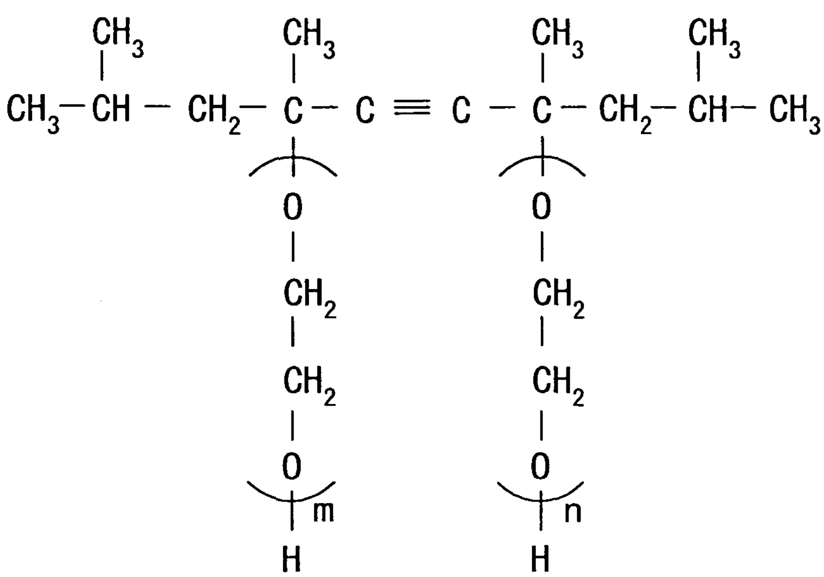

· · · (II)

In Formula (II), "m" and "n" are each an integer of 20 or less, and the total of "m" and "n" is more than 0 and equal to or less than 40.

$$R-(OCH_2CH_2)_nH \quad \cdots \text{(III)}$$

In Formula (III), "R" represents a hydrocarbon chain that may be branched having 6 to 14 carbon atoms; and "n" represents an integer of 5 to 20.

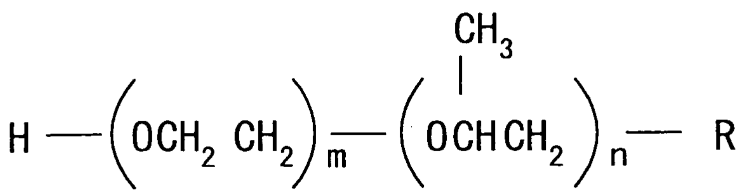

··· (IV)

In Formula (IV), "R" represents a branched hydrocarbon chain that may be branched having 6 to 14 carbon atoms; and "m" and "n" independently represent an integer of 1 to 20.

In addition to the compounds of Formulae (I), (II), (III) and (IV), the wetting agents also include diethylene glycol monophenyl ether, ethylene glycol monophenyl ether, ethylene glycol monoallyl ether, diethylene glycol monophenyl ether, diethylene glycol monobutyl ether, propylene glycol monobutyl ether, tetraethylene glycol chlorophenyl ether and other alkyl and aryl ethers of polyhydric alcohols, polyoxyethylene-polyoxypropylene block copolymers and other nonionic surfactants, fluorine-containing surfactants, ethanol, 2-propanol and other lower alcohols, of which diethylene glycol monobutyl ether is preferred.

Preferably, the average particle diameter of the fine particles is 1000 nm or less, more preferably is 500 nm or less from the viewpoint of ejection stability. That is, the diameter of 1000 nm or more tends to cause the clogging of the ejection head and inappropriate ejection. The average particle diameter may be determined by an optical particle size distributor, and is expressed as the particle diameter to which 50% of the particle number corresponds.

The fine particles are dispersed in a vehicle based on water to form a processing liquid. In dispersing, preferably a deflocculating agent is employed to stabilize the dispersion. The deflocculating agent forms double electric layer on the surface of chargeable particle, which renders the particles to electrostatically repulse each other and prevents them from approaching each other, thereby stabilizing the dispersion state. Since the fine particles are positively charged from the neutral through acid, examples of the deflocculating agent which can be used in the present invention include acetic acid, nitric acid, hydrochloric acid, formic acid, lactic acid and alkali metal salts thereof, zirconium compounds such as oxychloride zirconium hydrate, sodium pyrrolate, sodium hexamethalate, taurine and the like, but are not limited thereto.

The processing liquid according to the present invention may be prepared, for example, by the following process.

Fine particles, water, and a deflocculating agent are mixed to form a dispersion. A water-soluble solvent is added if necessary, and the mixture is deflocculated in a deflocculating machine.

Examples of the deflocculating machine are high-speed and high-shear rotary agitating deflocculating machine, dissolver, colloid mill, homogenizer and ultrasonic deflocculating machine, which may be commercially available under the trade names of T. K. AUTO HOMO MIXER and T. K. HOMOMIC LINE FLOW from Tokushu Kika Kogyo Co., Ltd., Ultra-homomixer and NNK Colloidmill from Nippon Seiki Seisakusho Co., Ltd. The rotational frequency at deflocculating may be set according to the type and structure of the deflocculating machine and is preferably from 500 rpm to 10000 rpm, and more preferably from 2000 rpm to 8000 rpm. The deflocculating is preferably performed at 5°C to 100°C for 0.01 to 48 hours, depending on the type and structure of the deflocculating machine.

The processing liquid according to the present invention may contain a cationic surfactant such as quaternary ammonium salts, pyridinium salts, imidazoline compounds and the like. Specifically, lauryltrimethylammonium chloride, lauryldimethylbenzylammonium chloride, benzyltributylammonium chloride, benzalkonium, chloride, cetylpyridinium chloride and 2-heptadecenylhydroxyethylimidazoline are exemplified.

Such cationic surfactants may provide effects to reduce the surface tension and increase the wettability with

the recording medium to thereby rapidly form the fine particle layer and to aggregate the anionic colorant, thus effectively improving the image quality.

The surface tension of the inventive processing liquid is preferably 20 to 60 dyne/cm, more preferably is 30 to 50 dyne/cm from the viewpoint of wettability with recording medium as well as finely divided droplets.

The visicosity of the inventive processing liquid is preferably from 1.0 to 20.0 cP, more preferably is 3.0 to 10.0 cP from the viewpoint of ejection stability.

The pH of the inventive processing liquid is preferably from 3 to 11, more preferably is 3 to 6, or 8 to 11 from the viewpoint of stable dispersion of fine particles.

Next, the recording liquid adapted to the ink set according to the present invention will be explained.

The coloring material employed in the recording liquid adapted to the present invention may be one of dyes, pigments, and mixtures thereof. When the fine particles are cationic, the coloring material is preferably anionic from the viewpoint of higher image quality since flocculates yield due to electrical neutralization.

Further, pigments are more preferred than dyes. Specifically, pigments in dispersion condition may yield flocculates more effectively than dyes in solution condition at electrical neutralization, thereby resulting in more significant effects on image quality.

The pigment used in the recording composition in the ink set according to the present invention includes an organic pigment and an inorganic pigment. Examples of the organic pigments are azo, phthalocyanine, anthraquinone, quinacridone, dioxazine, indigo, thioindigo, perylene, isoindolenone, aniline black, azomethine, Rhodamine B lake, and carbon black pigments. Examples of the inorganic pigments are iron oxide, titanium oxide, calcium carbonate, barium sulfate, aluminum hydroxide, barium yellow, Prussian blue, cadmium red, chrome yellow, and metal powders.

Examples of the pigment dispersant having an anionic group include polyacrylic acid, polymethacrylic acid, styreneacryl resin, styrene maleic acid resin, water-soluble vinylnaphthaleneacryl resin, water-soluble vinylnaphthanlene maleic acid resin, β-naphthalenesulfonate formaline condensate, Carboxymethylcellulose, starch glycolic acid, sodium alginate, pectic acid, hyaluronic acid and the like. These anionic dispersant may be used in the form of an acid or a salt of an alkali metal such as sodium and potassium.

Representative examples of the pigment having anionic groups on the surface include carbon blacks having carboxyl group or sulfonate group. Other examples include phthalocyanine pigments, anthraquinone pigments which may be treated by oxidation or with fuming sulfuric acid so that carboxyl group or sulfonate group is introduced to a part of the pigment particle.

Water-soluble dyes for use in the present invention include acidic dyes, direct dyes, basic dyes, reactive dyes and edible dyes (food dyes) as classified by the Color Index system, which have excellent water resistance and light resistance. Examples of dyes are as follows. Each of these dyes can be used in combination with each other or in combination with other colorants such as pigments within ranges not deteriorating the advantages of the present invention.

(a) Examples of the acidic dyes and food dyes are:

C. I. Acid Yellow 17, 23, 42, 44, 79 and 142;
C. I. Acid Red 1, 8, 13, 14, 18, 26, 27, 35, 37, 42, 52, 82, 87, 89, 92, 97, 106, 111, 114, 115, 134, 186, 249, 254 and 289;
C. I. Acid Blue 9, 29, 45, 92 and 249;
C. I. Acid Black 1, 2, 7, 24, 26 and 94;
C. I. Food Yellow 3 and 4;
C. I. Food Red 7, 9 and 14;
C. I. Food Black 1 and 2.

(b) Examples of the direct dyes are:

C. I. Direct Yellow 1, 12, 24, 26, 33, 44, 50, 86, 120, 132, 142 and 144;
C. I. Direct Red 1, 4, 9, 13, 17, 20, 28, 31, 39, 80, 81, 83, 89, 225 and 227;
C. I. Direct Orange 26, 29, 62 and 102;
C. I. Direct Blue 1, 2, 6, 15, 22, 25, 71, 76, 79, 86, 87, 90, 98, 163, 165, 199 and 202;
C. I. Direct Black 19, 22, 32, 38, 51, 56, 71, 74, 75, 77, 154, 168 and 171.

(c) Examples of the basic dyes are:

C. I. Basic Yellow 1, 2, 11, 13, 14, 15, 19, 21, 23, 24, 25, 28, 29, 32, 36, 40, 41, 45, 49, 51, 53, 63, 64, 65, 67, 70, 73, 77, 87 and 91;

C. I. Basic Red 2, 12, 13, 14, 15, 18, 22, 23, 24, 27, 29, 35, 36, 38, 39, 46, 49, 51, 52, 54, 59, 68, 69, 70, 73, 78, 82, 102, 104, 109 and 112;
C. I. Basic Blue 1, 3, 5, 7, 9, 21, 22, 26, 35, 41, 45, 47, 54, 62, 65, 66, 67, 69, 75, 77, 78, 89, 92, 93, 105, 117, 120, 122, 124, 129, 137, 141, 147 and 155;
C. I. Basic Black 2 and 8.

(d) Examples of the reactive dyes are:

C. I. Reactive Black 3, 4, 7, 11, 12 and 17;
C. I. Reactive Yellow 1, 5, 11, 13, 14, 20, 21, 22, 25, 40, 47, 51, 55, 65 and 67;
C. I. Reactive Red 1, 14, 17, 25, 26, 32, 37, 44, 46, 55, 60, 66, 74, 79, 96 and 97;
C. I. Reactive Blue 1, 2, 7, 14, 15, 23, 32, 35, 38, 41, 63, 80 and 95.

The recording liquid utilized in the present invention preferably further comprises a water-soluble organic solvent in addition to the coloring material, for the purpose of adjusting the physical properties of the recording liquid desirably or preventing clogging of recording head nozzles. Such water-soluble organic solvents include humectants and wetting agents. The humectant is added in order to prevent the clogging of recording head nozzles.

Examples of the humectants include ethylene glycol, diethylene glycol, triethylene glycol, tetraethylene glycol, polyethylene glycol, propylene glycol, 1,3-butanediol, 1,3-propanediol, 2-methyl-1,3-propanediol, 1,4-butanediol, 1,5-pentanediol, 1,6-hexanediol, glycerol, 1,2,6-hexanetriol, 2-ethyl-1,3-hexanediol, 1,2,4-butanetriol, 1,2,3-butanetriol, petriol (3-methyl-1,3,5-pentanetriol) and other polyhydric alcohols; ethylene glycol monoethyl ether, ethylene glycol monobutyl ether, diethylene glycol monomethyl ether, diethylene glycol monoethyl ether, diethylene glycol monobutyl ether, triethylene glycol monobutyl ether, tetraethylene glycol monomethyl ether, propylene glycol monoethyl ether and other polyhydric alcohol alkyl etehrs; ethylene glycol monopenyl ether, ethylene glycol monobenzyl ether and other polyhydric alcohol aryl ethers; N-methyl-2-pyrrolidone, N-hydroxyethyl-2-pyrrolidone, 2-pyrrolidone, 1,3-dimethylimidazolidinone, ε-caprolactam and other nitrogen-containing heterocyclic compounds; formamide, N-methylformamide, N,N-dimethylformamide and other amides; monoethanolamine, diethanolamine, triethanolamine, monoethylamine, diethylamine, triethylamine and other amines; dimethyl sulfoxide, sulfolane, thiodiethanol and other sulfur-containing compounds; propylene carbonate, ethylene carbonate, and γ-butyrolactone. With water, each of these humectants can be used alone or in combination.

Wetting agents are used for improving wettability between the processing liquid and the recording medium and controlling the penetrating velocity. As for the wetting agent, those expressed by the following Formulas (I) to (IV) are preferred. That is, polyoxyethylene alkylphenyl ether surfactants of Formula (I), acetylene glycol surfactants of Formula (II), polyoxyethylene alkyl ether surfactants of Formula (III), and polyoxyethylene polyoxypropylene alkyl ether surfactants of Formula (IV) can reduce the surface tension of the liquid and improve the wettability to thereby increase the penetration velocity.

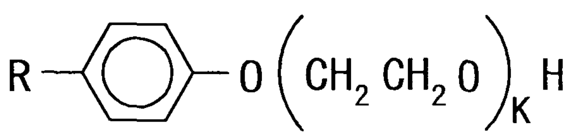

· · · (I)

In Formula (I), "R" represents a hydrocarbon chain that may be branched having 6 to 14 carbon atoms; and "k" represents an integer of 5 to 20.

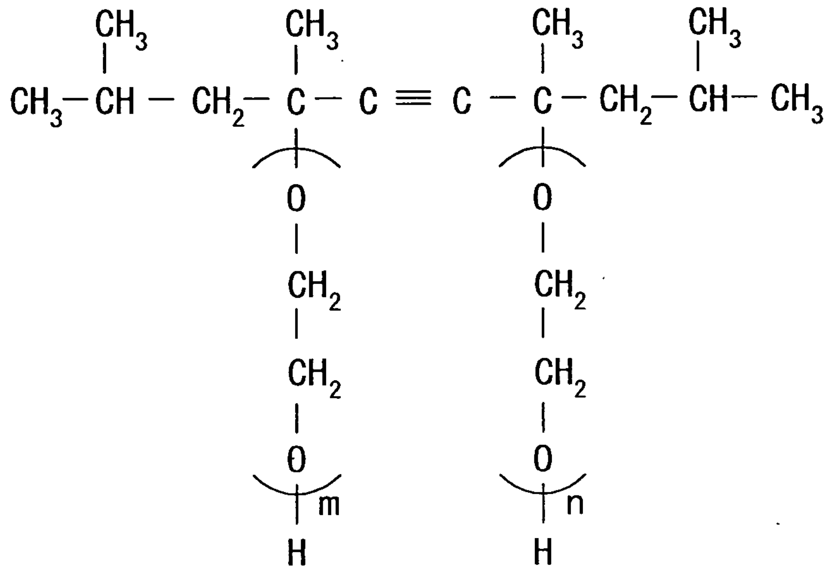

· · · (II)

In Formula (II), "m" and "n" are each an integer of 20 or less, and the total of "m" and "n" is more than 0 and equal to or less than 40.

$$R-(OCH_2CH_2)_nH \quad \cdots (III)$$

In Formula (III), "R" represents a linear or branched hydrocarbon chain having 6 to 14 carbon atoms; and "n" represents an integer of 5 to 20.

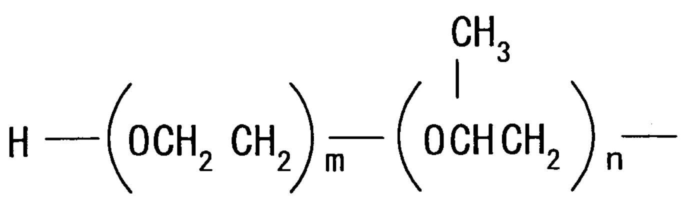

· · · (IV)

In Formula (IV), "R" represents a hydrocarbon chain that may be branched having 6 to 14 carbon atoms; and "m" and "n" independently represent an integer of 1 to 20.

In addition to the compounds of Formulae (I), (II), (III) and (IV), the wetting agents also include diethylene glycol monophenyl ether, ethylene glycol monophenyl ether, ethylene glycol monoallyl ether, diethylene glycol monophenyl ether, diethylene glycol monobutyl ether, propylene glycol monobutyl ether, tetraethylene glycol chlorophenyl ether and other alkyl and aryl ethers of polyhydric alcohols, polyoxyethylene-polyoxypropylene block copolymers and other nonionic surfactants, fluorine-containing surfactants, ethanol, 2-propanol and other lower alcohols, of which diethylene glycol monobutyl ether is preferred.

The surface tension of the inventive recording liquid is preferably from 20 to 60 dyne/cm and more preferably from 30 to 50 dyne/cm for better wettability with the recording medium and satisfactory granulation of the droplets.

The visicosity of the inventive recording liquid is preferably from 1.0 to 20.0 cP, more preferably is 3.0 to 10.0 cP from the viewpoint of ejection stability.

The pH of the inventive recording liquid is preferably from 3 to 11, more preferably is 6 to 10 from the viewpoint of preventing the corrosion of metal member that contacts with the liquid.

The inventive processing liquid and the inventive recording liquid employed in the ink set may further comprise any of antiseptic-antimildew agents for preventing growth of microorganisms and for increasing storage stability and image quality stability.

Examples of such antiseptic-antimildew agents include benzotriazole, sodium dehydroacetate, sodium sorbate, sodium 2-pyridinethiol-1-oxide, isothiazoline compounds, sodium benzoate, and sodium pentachlorophenol.

The inventive processing liquid and the inventive recording liquid employed in the ink set may contain an anti-corrosion agent. By adding the anti-corrosion agent, it is possible to prevent metal corrosion through forming a film on metal surface as that of the head to which the liquid contact. Examples of the anti-corrosion agent include acidic sulfites, sodium thiosulfate, (thiodiglycolic acid)ammonium, diisopropylammonium nitirite, pentaerythritol tetranitrate, and dicyclohexyl ammonium nitrite.

The inventive processing liquid and the inventive recording liquid employed in the ink set may comprise an anti-oxidant. By adding the anti-oxidant, corrosion may be prevented since the anti-oxidant eliminates radical species that possibly cause the corrosion. Such antioxidants are represented by phenolic compounds and amine compounds. Examples of the phenolic compounds are hydroquinone, gallates and other compounds;
2,6-di-tert-butyl-p-cresol,
stearyl-β-(3,5-di-tert-butyl-4-hydroxyphenyl)propionate,
2,2'-methylenebis(4-methyl-6-tert-butylphenol),
2,2'-methylenebis(4-ethyl-6-tert-butylphenol),
4,4'-thiobis(3-methyl-6-tert-butylphenol),
1,1,3-tris(2-methyl-4-hydroxy-5-tert-butylphenyl)butane,
1,3,5-trimethyl-2,4,6-tris(3,5-di-tert-4-hydroxybenzyl)benzene,
tris(3,5-di-tert-butyl-4-hydroxybenzyl)isocyanurate,
tetrakis[methylene-3-(3',5'-di-tert-butyl-4-hydroxyphenyl)propionate]metha ne, tannic acid and other hindered phenolic compounds. Examples of the amine compounds are N,N'-diphenyl-p-phenylenediamine,
phenyl-β-naphthylamine, phenyl-α-naphthylamine,
N,N'-β-naphthyl-p-phenylenediamine, N,N'-diphenylethylenediamine, phenothiazine, N,N'-di-sec-butyl-p-phenylenediamine and 4,4'-tetramethyl-diaminodiphenylmethane.

Typical examples of the peroxide separation antioxidants are sulfur compounds and phosphorus compounds. Examples of the sulfur compounds are dilauryl thiodipropionate, distearyl thiodipropionate, laurylstearyl thiodipropionate, dimyristyl thiodipropionate, distearyl β,β'-thiodibutyrate, 2-mercaptobenzimidazole and dilauryl sulfide. Examples of the phosphorus compounds are triphenyl phosphite, trioctadecyl phosphite, tridecyl phosphite, trilauryl trithiophosphite, diphenylisodecyl phosphite, trinonylphenyl phosphite and distearylpentaerythritol phosphite.

The inventive processing liquid and the inventive recording liquid employed in the ink set may contain pH adjusting agent. Examples of the pH adjusting agent include lithium hydroxide, sodium hydroxide, potassium hydroxide and other alkali metal hydroxides; ammonium hydroxide, quaternary ammonium hydroxides, quaternary phosphonium hydroxides; lithium carbonate, sodium carbonate, potassium carbonate and other alkali metal carbonates; diethanolamine, triethanolamine and other amines; boric acid, hydrochloric acid, nitric acid sulfuric acid, acetic acid and other acids.

The inventive ink set for ink-jet recording has a feature that the inventive processing liquid for ink-jet recording and the inventive recording liquid are combined, wherein the recording liquid comprises coloring material that reacts with fine particles in the processing liquid then the recording liquid contacts with the processing liquid.

The inventive cartridge of processing liquid for ink-jet recording is not particularly defined, but that the cartridge contains the inventive processing liquid for ink-jet recording.

Further, the inventive image recording apparatus of ink-jet recording is not particularly defined; but that the cartridge of processing liquid for containing the inventive processing liquid for ink-jet recording, and the cartridge of recording liquid containing coloring material that reacts with fine particles in the processing liquid when contacting with the processing liquid, are mounted; an ejecting device that communicates with the cartridge of recording liquid and supplies the recording liquid to the recording media, and an ejecting device that communicates with the cartridge of processing liquid and supplies the processing liquid to the recording media, are equipped; and making the recording liquid and the processing liquid contact each other on the recording media to form images.

The ink-jet recording process according to the present invention, and the image forming apparatus to carry out the process will be explained referring to the figures.

FIG. 1 shows an exemplary image forming apparatus according to the present invention. In the image forming apparatus 1, the inventive processing liquid and recording liquid are contained in the cartridge 20, and the processing liquid and recording liquid are fed from the cartridge to the recording head. By the way, cartridge 20 is mounted in a manner that those for processing liquid and recording liquids of respective colors are separated.

The recording head is mounted on carriage, and moves by action of timing belt 23 driven by main scanning motor 24, while being guided by guide shafts 21 and 22. On the other hand, the recording medium is arranged by

platen 19 so as to face the recording head. Image forming apparatus 1 is covered with main housing 2, and comprises gear mechanism, sub-scanning motor 17, sustaining driving motor 26, and gear mechanisms 25, 27.

FIG. 2 shows an enlarged nozzle surface of recording head. Nozzle 31 for discharging the processing liquid is arranged in a vertical direction, nozzles 32, 33, 34 and 35 discharge yellow, magenta, cyan and black recording liquids respectively.

FIG. 3 shows another configuration of the recording head, in which all the nozzles are arranged in traverse line. In FIG. 3, nozzles 36 and 41 are for ejecting the processing liquid; nozzles 37, 38, 39 and 40 eject yellow, magenta, cyan and black recording liquids respectively. The recording head of this aspect equips nozzles for ejecting the processing liquid at both of right and left ends, therefore, can print in both directions of its movement. That is, the recording head can apply the processing liquid first to the recording medium and then apply the color recording compositions there onto, or vise vista, in both directions, which can reduce difference in image density between the two moving directions of the recording head.

Each cartridge in the image forming apparatus can be replaced for another processing liquid or recording liquid. The cartridges may be integrated with the recording head.

FIGs. 4 and 5 show an exemplary cartridge capable of containing the inventive processing liquid and recording liquid.

The cartridge shown in FIGs. 4 and 5 can contain the processing liquid and the recording liquid. In FIGs 4 and 5, cartridge 20 contains in cartridge housing 49 liquid absorber 42 to which the recording liquid or processing liquid is absorbed. The cartridge housing 49 is formed of case 43 having on its upper opening top-lid member 23 adhered or welded thereto, and may for example be a molded resin. The liquid absorber 42 is of porous material such as a urethane foam which is compressed and inserted into the cartridge housing 49, and then is made to absorb the recording or processing liquid.

Recess 48 is formed on the top-lid member 44, and an air opening 47 is formed near the center thereof. The air opening 47 is sealed with a strip sealing member 55. The sealing member 55 is made of a material which blocks air or is impermeable to air such as an aluminum sheet or a polymer sheet with low air permeability. A material for welding is applied on the side of this sealing member 55 that adheres to the case, and it adheres around the recess 48 through heat sealing. The recess 48 is formed for providing a room to prevent the air opening 47 from being clogged by the adhesive material. When using the cartridge, the sealing member 55 is peeled off to allow the cartridge 7 open to air. By opening to air, the air penetrates into space A. By the penetration of air, the recording composition will be supplied to the recording head smoothly during printing.

At the bottom of the case 43 of the cartridge housing 49, liquid supplying orifice 45 is formed to supply the recording composition to the recording head. By inserting protrusion 51 for preventing liquid leakage, which is formed in cap member 50, into the liquid supplying orifice 45, it is possible to prevent liquid leakage during transportation of the cartridge. Around the liquid supplying orifice 45, an elastic seal ring 46 such as rubber is mounted for sealing the liquid supplying orifice 45 and the liquid-leakage-preventing protrusion when they are joined together. When in use of the cartridge, the cap member 50 is removed.

On the side of the case 43 of the cartridge housing 49, a cartridge-positioning portion 71 is formed so that when the cartridge 7 is mounted on a carriage 18, the cartridge housing is fixed at a predetermined position. In order to detach the cartridge 7 from the carriage 18 for replacement, a finger is inserted in the cartridge detachment recess 82, and the finger is placed on a cartridge detachment finger receiving portion 81a on a side of a cartridge detachment protrusion 81 to pull it off.

The inventive image forming process for ink-jet recording comprises applying the inventive processing liquid for ink-jet recording to a recording medium, and applying the coloring material that reacts with fine particles in the processing liquid when contacting with the processing liquid, and making the recording liquid and the processing liquid contact each other on the recording media to form images.

As for the area or range where the recording and the processing liquids ejected from the respective printer head are overlapped, most preferably, the recording and the processing liquids are overlapped at the same sites. However, the scope of the present invention is not defined to this aspect. For example, the following cases are included in the scope of the present invention; for example, the case where the processing liquid is applied at separated sites and extended by means of bleeding for example then the recording liquid is overlapped, or the case where the processing liquid is applied only at the outline of images then the recording liquid is overlapped.

In addition, the recording matter is within the scope of invention in which images are formed by ink which contains flocculates produced by contacting the recording liquid and the inventive processing liquid for ink-jet recording.

The inventive cartridge set for ink-jet recording has a feature that the inventive cartridge of processing liquid for ink-jet recording, and the cartridge of recording liquid containing coloring material that reacts with fine particles in the processing liquid when contacting with the processing liquid, are combined.

Hereinafter, the present invention will be described specifically by way of Examples, but it should be understood that the present invention is not limited thereto.

(1) Process for Preparing Processing Liquid

The respective components of processing liquid shown below were mixed and stirred then filtered through a polytetrafluoroethylene fluorine-containing resin filter (0.8 ,, m), thereby the respective processing liquids were prepared. The dispersions of fine particles were commercially available, and each concentration was adjusted by removing the moisture under reduced pressure if necessary. The weight of fine particles such as cationic colloidal silica, alumina and the like refers to solid content of fine particles, not the weight of commercially available dispersions. All parts are by weight in the following expressions of each component.

| < Processing Liquid 1 > | |
|---|---|
| Cationic colloidal silica (SNOW TEX AK; Nissan Chemical Industries, Ltd.) | 5 parts |
| Glycerin (boiling point: 290 °C) | 10 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 2 > | |
|---|---|
| Cationic colloidal silica (SNOW TEX AK; Nissan Chemical Industries, Ltd.) | 5 parts |
| Glycerin (boiling point: 290 °C) | 15 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 3 > | |
|---|---|
| Cationic colloidal silica (SNOW TEX AK; Nissan Chemical Industries, Ltd.) | 5 parts |
| Glycerin (boiling point: 290 °C) | 20 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 4 > | |
|---|---|
| Cationic colloidal silica (SNOW TEX AK; Nissan Chemical Industries, Ltd.) | 5 parts |
| Glycerin (boiling point: 290 °C) | 25 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 5 > | |
|---|---|
| Cationic colloidal silica (SNOW TEX AK; Nissan Chemical Industries, Ltd.) | 10 parts |
| Glycerin (boiling point: 290 °C) | 10 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 6 > | |
|---|---|
| Cationic colloidal silica (SNOW TEX AK; Nissan Chemical Industries, Ltd.) | 10 parts |

(continued)

| < Processing Liquid 6 > | |
|---|---|
| Glycerin (boiling point: 290 °C) | 15 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 7 > | |
|---|---|
| Cationic colloidal silica (SNOW TEX AK; Nissan Chemical Industries, Ltd.) | 10 parts |
| Glycerin (boiling point: 290 °C) | 20 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 8 > | |
|---|---|
| Cationic colloidal silica (SNOW TEX AK; Nissan Chemical Industries, Ltd.) | 10 parts |
| Glycerin (boiling point: 290 °C) | 25 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 9 > | |
|---|---|
| Cationic colloidal silica (SNOW TEX AK; Nissan Chemical Industries, Ltd.) | 15 parts |
| Glycerin (boiling point: 290 °C) | 10 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 10 > | |
|---|---|
| Cationic colloidal silica (SNOW TEX AK; Nissan Chemical Industries, Ltd.) | 15 parts |
| Glycerin (boiling point: 290 °C) | 15 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 11 > | |
|---|---|
| Cationic colloidal silica (SNOW TEX AK; Nissan Chemical Industries, Ltd.) | 15 parts |
| Glycerin (boiling point: 290 °C) | 20 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 12 > | |
|---|---|
| Cationic colloidal silica (SNOW TEX AK; Nissan Chemical Industries, Ltd.)<br>Glycerin (boiling point: 290 °C)<br>Cationic surfactant (Cation G 50; Sanyo Chemical Industries, Ltd.)<br>Antiseptic-antimildew agent (PROXEL LV(s); Avecia Ltd.)<br>De-ionized water | 15 parts<br>25 parts<br>2 parts<br>0.4 part<br>Balance |

| < Processing Liquid 13 > | |
|---|---|
| Cationic colloidal silica (SNOW TEX AK; Nissan Chemical Industries, Ltd.)<br>1,3-butanediol (boiling point: 207.5 °C)<br>Cationic surfactant (Cation G 50; Sanyo Chemical Industries, Ltd.)<br>Antiseptic-antimildew agent (PROXEL LV(s); Avecia Ltd.)<br>De-ionized water | 15 parts<br>10 parts<br>2 parts<br>0.4 part<br>Balance |

| < Processing Liquid 14 > | |
|---|---|
| Cationic colloidal silica (SNOW TEX AK; Nissan Chemical Industries, Ltd.)<br>1,3-butanediol (boiling point: 207.5 °C)<br>Cationic surfactant (Cation G 50; Sanyo Chemical Industries, Ltd.)<br>Antiseptic-antimildew agent (PROXEL LV(s); Avecia Ltd.)<br>De-ionized water | 15 parts<br>15 parts<br>2 parts<br>0.4 part<br>Balance |

| < Processing Liquid 15 > | |
|---|---|
| Cationic colloidal silica (SNOW TEX AK; Nissan Chemical Industries, Ltd.)<br>1,3-butanediol (boiling point: 207.5 °C)<br>Cationic surfactant (Cation G 50; Sanyo Chemical Industries, Ltd.)<br>Antiseptic-antimildew agent (PROXEL LV(s); Avecia Ltd.)<br>De-ionized water | 15 parts<br>20 parts<br>2 parts<br>0.4 part<br>Balance |

| < Processing Liquid 16 > | |
|---|---|
| Cationic colloidal silica (SNOW TEX AK; Nissan Chemical Industries, Ltd.)<br>1,3-butanediol (boiling point: 207.5 °C)<br>Cationic surfactant (Cation G 50; Sanyo Chemical Industries, Ltd.)<br>Antiseptic-antimildew agent (PROXEL LV(s); Avecia Ltd.)<br>De-ionized water | 15 parts<br>25 parts<br>2 parts<br>0.4 part<br>Balance |

| < Processing Liquid 17 > | |
|---|---|
| Cationic colloidal silica (SNOW TEX AK; Nissan Chemical Industries, Ltd.)<br>Propylene glycol (boiling point: 188.2 °C)<br>Cationic surfactant (Cation G 50; Sanyo Chemical Industries, Ltd.)<br>Antiseptic-antimildew agent (PROXEL LV(s); Avecia Ltd.)<br>De-ionized water | 15 parts<br>25 parts<br>2 parts<br>0.4 part<br>Balance |

| < Processing Liquid 18 > | |
|---|---|
| Cationic colloidal silica (SNOW TEX AK; Nissan Chemical Industries, Ltd.) | 15 parts |
| Ethylene glycol (boiling point: 197.6 °C) | 25 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 19 > | |
|---|---|
| Cationic colloidal silica (SNOW TEX AK; Nissan Chemical Industries, Ltd.) | 15 parts |
| 2-methyl-2,4-pentanediol (boiling point: 198.0 °C) | 25 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 20 > | |
|---|---|
| Cationic colloidal silica (SNOW TEX AK; Nissan Chemical Industries, Ltd.) | 15 parts |
| N-methyl-2-pyrrolidone (boiling point: 202.0 °C) | 25 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 21 > | |
|---|---|
| Cationic colloidal silica (SNOW TEX AK; Nissan Chemical Industries, Ltd.) | 15 parts |
| 2,2-dimethyl-1,3-propanediol (boiling point: 208.0 °C) | 25 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 22 > | |
|---|---|
| Cationic colloidal silica (SNOW TEX AK; Nissan Chemical Industries, Ltd.) | 15 parts |
| 1,6-hexanediol (boiling point: 208.0 °C) | 25 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 23 > | |
|---|---|
| Cationic colloidal silica (SNOW TEX AK; Nissan Chemical Industries, Ltd.) | 15 parts |
| 3-methylpentane-1,3,5-triol (boiling point: 216.0 °C) | 25 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 24 > | |
|---|---|
| Cationic colloidal silica (SNOW TEX AK; Nissan Chemical Industries, Ltd.) | 15 parts |
| Dipropyleneglycol (boiling point: 233.0 °C) | 25 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 25 > | |
|---|---|
| Cationic colloidal silica (SNOW TEX AK; Nissan Chemical Industries, Ltd.) | 15 parts |
| 1,5-pentanediol (boiling point: 239.0 °C) | 25 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 26 > | |
|---|---|
| Cationic colloidal silica (SNOW TEX AK; Nissan Chemical Industries, Ltd.) | 15 parts |
| Diethyleneglycol (boiling point: 244.0 °C) | 25 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 27 > | |
|---|---|
| Cationic colloidal silica (SNOW TEX AK; Nissan Chemical Industries, Ltd.) | 15 parts |
| 2-pyrrolidone (boiling point: 245.0 °C) | 25 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 28 > | |
|---|---|
| Cationic colloidal silica (SNOW TEX AK; Nissan Chemical Industries, Ltd.) | 15 parts |
| Triethyleneglycol (boiling point: 285.0 °C) | 25 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 29 > | |
|---|---|
| Cationic colloidal silica (SNOW TEX AK; Nissan Chemical Industries, Ltd.) | 15 parts |
| 2-ethyl-2-(hydroxymethyl)-1,3-propanediol (boiling point: 295.0 °C) | 25 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 30 > | |
|---|---|
| Cationic colloidal silica (SNOW TEX AK; Nissan Chemical Industries, Ltd.) | 15 parts |
| 2-pyrrolidone (boiling point: 245.0 °C) | 12.5 parts |
| Diethyleneglycol (boiling point: 244.0 °C) | 12.5 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 31 > | |
|---|---|
| Cationic colloidal silica (SNOW TEX AK; Nissan Chemical Industries, Ltd.) | 15 parts |
| 2-pyrrolidone (boiling point: 245.0 °C) | 12.5 parts |
| Triethyleneglycol (boiling point: 285.0 °C) | 12.5 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 32 > | |
|---|---|
| Cationic colloidal silica (SNOW TEX AK; Nissan Chemical Industries, Ltd.) | 15 parts |
| 2-pyrrolidone (boiling point: 245.0 °C) | 12.5 parts |
| 2-ethyl-2-(hydroxymethyl)-1,3-propanediol (boiling point: 295.0 °C) | 12.5 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 33 > | |
|---|---|
| Cationic colloidal silica (SNOW TEX AK; Nissan Chemical Industries, Ltd.) | 15 parts |
| 2-pyrrolidone (boiling point: 245.0 °C) | 12.5 parts |
| 3-methylpentane-1,3,5-triol (boiling point: 216.0 °C) | 12.5 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 34 > | |
|---|---|
| Alumina sol 520 (SNOW TEX AK; Nissan Chemical Industries, Ltd.) | 15 parts |
| Glycerin (boiling point: 290.0 °C) | 25 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 35 > | |
|---|---|
| Alumina sol 520 (SNOW TEX AK; Nissan Chemical Industries, Ltd.) | 15 parts |
| Glycerin (boiling point: 290.0 °C) | 25 parts |
| Nonionic surfactant (Dispernol TOC; NOF Co.) | 2 parts |
| Antiseptic-antimildew agent (PROXEL LV(s); Avecia Ltd.) | 0.4 part |

(continued)

| < Processing Liquid 35 > | |
|---|---|
| De-ionized water | Balance |

| < Processing Liquid 36 > | |
|---|---|
| Silica coated with polyallylamine | 15 parts |
| Glycerin (boiling point: 290.0 °C) | 25 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 37 > | |
|---|---|
| Cationic colloidal silica (SNOW TEX AK; Nissan Chemical Industries, Ltd.) | 20 parts |
| Glycerin (boiling point: 290.0 °C) | 25 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 38 > | |
|---|---|
| Cationic colloidal silica (SNOW TEX AK; Nissan Chemical Industries, Ltd.) | 20 parts |
| Glycerin (boiling point: 290.0 °C) | 30 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 39 > | |
|---|---|
| Cationic colloidal silica (SNOW TEX AK; Nissan Chemical Industries, Ltd.) | 20 parts |
| Glycerin (boiling point: 290.0 °C) | 35 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 40 > | |
|---|---|
| Cationic colloidal silica (SNOW TEX AK; Nissan Chemical Industries, Ltd.) | 25 parts |
| Glycerin (boiling point: 290.0 °C) | 30 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 41 > | |
|---|---|
| Cationic colloidal silica (SNOW TEX AK; Nissan Chemical Industries, Ltd.) | 25 parts |
| Glycerin (boiling point: 290.0 °C) | 35 parts |
| Cationic surfactant (Cation G 50; Sanyo Chemical Industries, Ltd.) | 2 parts |

(continued)

| < Processing Liquid 41 > | |
|---|---|
| Antiseptic-antimildew agent (PROXEL LV(s); Avecia Ltd.)<br>De-ionized water | 0.4 part<br>Balance |

| < Processing Liquid 42 > | |
|---|---|
| Cationic colloidal silica (SNOW TEX AK; Nissan Chemical Industries, Ltd.)<br>Glycerin (boiling point: 290.0 °C)<br>Cationic surfactant (Cation G 50; Sanyo Chemical Industries, Ltd.)<br>Antiseptic-antimildew agent (PROXEL LV(s); Avecia Ltd.)<br>De-ionized water | 25 parts<br>40 parts<br>2 parts<br>0.4 part<br>Balance |

| < Processing Liquid 43 > | |
|---|---|
| Cationic colloidal silica (SNOW TEX AK; Nissan Chemical Industries, Ltd.)<br>Glycerin (boiling point: 290.0 °C)<br>Cationic surfactant (Cation G 50; Sanyo Chemical Industries, Ltd.)<br>Antiseptic-antimildew agent (PROXEL LV(s); Avecia Ltd.)<br>De-ionized water | 30 parts<br>35 parts<br>2 parts<br>0.4 part<br>Balance |

| < Processing Liquid 44 > | |
|---|---|
| Cationic colloidal silica (SNOW TEX AK; Nissan Chemical Industries, Ltd.)<br>Glycerin (boiling point: 290.0 °C)<br>Cationic surfactant (Cation G 50; Sanyo Chemical Industries, Ltd.)<br>Antiseptic-antimildew agent (PROXEL LV(s); Avecia Ltd.)<br>De-ionized water | 30 parts<br>40 parts<br>2 parts<br>0.4 part<br>Balance |

| < Processing Liquid 45 > | |
|---|---|
| Cationic colloidal silica (SNOW TEX AK; Nissan Chemical Industries, Ltd.)<br>Glycerin (boiling point: 290.0 °C)<br>Cationic surfactant (Cation G 50; Sanyo Chemical Industries, Ltd.)<br>Antiseptic-antimildew agent (PROXEL LV(s); Avecia Ltd.)<br>De-ionized water | 30 parts<br>45 parts<br>2 parts<br>0.4 part<br>Balance |

| < Processing Liquid 46 > | |
|---|---|
| Cationic colloidal silica (SNOW TEX AK; Nissan Chemical Industries, Ltd.)<br>Glycerin (boiling point: 290.0 °C)<br>Cationic surfactant (Cation G 50; Sanyo Chemical Industries, Ltd.)<br>Antiseptic-antimildew agent (PROXEL LV(s); Avecia Ltd.)<br>De-ionized water | 30 parts<br>50 parts<br>2 parts<br>0.4 part<br>Balance |

| < Processing Liquid 47 > | |
|---|---|
| Cationic colloidal silica<br>(SNOW TEX AK; Nissan Chemical Industries, Ltd.) | 35 parts |

(continued)

| < Processing Liquid 47 > | |
|---|---|
| Glycerin (boiling point: 290.0 °C) | 40 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 48 > | |
|---|---|
| Cationic colloidal silica (SNOW TEX AK; Nissan Chemical Industries, Ltd.) | 35 parts |
| Glycerin (boiling point: 290.0 °C) | 45 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 49 > | |
|---|---|
| Cationic colloidal silica (SNOW TEX AK; Nissan Chemical Industries, Ltd.) | 35 parts |
| Glycerin (boiling point: 290.0 °C) | 50 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 50 > | |
|---|---|
| Cationic colloidal silica (SNOW TEX AK; Nissan Chemical Industries, Ltd.) | 35 parts |
| Glycerin (boiling point: 290.0 °C) | 55 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 51 > | |
|---|---|
| Cationic colloidal silica (SNOW TEX AK; Nissan Chemical Industries, Ltd.) | 40 parts |
| Glycerin (boiling point: 290.0 °C) | 45 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 52 > | |
|---|---|
| Cationic colloidal silica (SNOW TEX AK; Nissan Chemical Industries, Ltd.) | 40 parts |
| Glycerin (boiling point: 290.0 °C) | 50 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 53 > | |
|---|---|
| Cationic colloidal silica (SNOW TEX AK; Nissan Chemical Industries, Ltd.) | 40 parts |
| Glycerin (boiling point: 290.0 °C) | 55 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

| < Processing Liquid 54 > | |
|---|---|
| Cationic colloidal silica (SNOW TEX AK; Nissan Chemical Industries, Ltd.) | 40 parts |
| Glycerin (boiling point: 290.0 °C) | 60 parts |
| Cationic surfactant (Cation G 50; Sanyo Chemical Industries, Ltd.) | 2 parts |
| Antiseptic-antimildew agent (PROXEL LV(s); Avecia Ltd.) | 0.4 part |
| De-ionized water | Balance |

(2) Process for Preparing Recording Liquid

The respective components of recording liquid shown below were mixed and stirred then filtered through a polytetrafluoroethylene fluorine-containing resin filter (0.8 ,, m), thereby the respective recording liquids were prepared.

| < Recording Liquid 1 > | |
|---|---|
| Pigment (Cabojet 300; Cabot Co.) | 10 parts |
| 1,3-butanediol | 22.5 parts |
| Glycerin | 7.5 parts |
| Surfactant (I), $R=C_9H_{19}$, k=12 | 1 part |
| 2-pyrrolidone | 2 parts |
| Sodium dehydroacetate | 0.2 part |
| Sodium thiosulfate | 0.2 part |
| Antiseptic-antimildew agent (PROXEL LV(s); Avecia Ltd.) | 0.4 part |
| De-ionized water | Balance |

| < Recording Liquid 2 > | |
|---|---|
| C.I. Direct Black 168 | 4 parts |
| Ethylene glycol | 15 parts |
| Glycerin | 5 parts |
| Surfactant (I), $R=C_9H_{19}$, k=12 | 1 part |
| Antiseptic-antimildew agent (PROXEL LV(s); Avecia Ltd.) | 0.4 part |
| De-ionized water | Balance |

Adjusted to pH 10.5 by LiOH aqueous solution, then utilized.

| < Recording Liquid 3 > | |
|---|---|
| Pigment (Cabojet 300; Cabot Co.) | 6 parts |
| C.I. Direct Black 168 | 4 parts |
| 1,3-butanediol | 22.5 parts |
| Glycerin | 7.5 parts |
| Surfactant (I), $R=C_9H_{19}$, k=12 | 1 part |
| 2-pyrrolidone | 2 parts |
| Sodium dehydroacetate | 0.2 part |

(continued)

| < Recording Liquid 3 > | |
|---|---|
| Sodium thiosulfate | 0.2 part |
| Antiseptic-antimildew agent (PROXEL LV(s); Avecia Ltd.) | 0.4 part |
| De-ionized water | Balance |

(3) Evaluation of Moisture Retention and Ejection Stability after Allowing to Stand for Examples 1 to 21 and Comparative Examples 1 to 33

Accelerative test for moisture retention property was conducted in the following manner: each of the processing liquids of Table 1-1 to Table 1-3 was sampled in an amount of 10 milliliter into a beaker of 50 milliliter, and each beaker was situated in an isothermal bath at 50 °C while opening the inlet, thus each processing liquid was heated and allowed to stand thereby volatile component(s) was removed. The conditions of residue of the respective processing liquids were observed after heating at 50 °C for 72 hours, then were evaluated subjectively based on the following criteria.

○: Fluidity is assured.
Δ: Some tendency of flocculation
×: Occurrences of whitening or cracking

Each of the processing liquids of Table 1-1 to Table 1-3 was filled into the ink cartridge (Type J300; Ricoh Co., Ltd.) for Ipsio Jet 300 (Ricoh Co., Ltd.) and mounted to Ipsio Jet 300. Then head cleaning was conducted two times repeatedly, and each processing liquid was made fill to the nozzle. In this condition, the nozzle face was exposed to atmosphere at room temperature and was allowed to stand for one hour without covering by a moisture-retention cap. Then, each processing liquid was printed on paper as a solid image of 5 cmx5 cm and ejection defect of each processing liquid was observed. They were evaluated subjectively based on the following criteria.

○: There exist no ejection defects, and uniform printing has been formed entirely.
×: Non-ejected parts are observed.

The evaluation results in terms of moisture retention and the evaluation results in terms of ejection stability after allowing to stand were shown together in Table 1-1 to Table 1-3.

[ Table1-1]

| | | Fine Particles | | Water-Soluble Organic Solvent | | B.P. °C *1) | Content (b) *2) | (b)/(a) | Surfac-tant | Evaluation of Moisture Retention | | Evaluation of Ejection Stability after Leaving |
|---|---|---|---|---|---|---|---|---|---|---|---|---|
| | | Type | Content (a) wt % | Type | Content wt % | | | | | | Residue Condition after Heating | |
| Comp. Ex. 1 | Pro. Liq. 1 | Cat. Silica | 5 | Glycerin | 10 | 290.0 | 10 | 2.00 | G50 | ○ | Good | ○ |
| Comp. Ex. 2 | Pro. Liq. 2 | Cat. Silica | 5 | Glycerin | 15 | 290.0 | 15 | 3.00 | G50 | ○ | Good | ○ |
| Comp. Ex. 3 | Pro. Liq. 3 | Cat. Silica | 5 | Glycerin | 20 | 290.0 | 20 | 4.00 | G50 | ○ | Good | ○ |
| Comp. Ex. 4 | Pro. Liq. 4 | Cat. Silica | 5 | Glycerin | 25 | 290.0 | 25 | 5.00 | G50 | ○ | Good | ○ |
| Comp. Ex. 5 | Pro. Liq. 5 | Cat. Silica | 10 | Glycerin | 10 | 290.0 | 10 | 1.00 | G50 | × | Crack | × |
| Comp. Ex. 6 | Pro. Liq. 6 | Cat. Silica | 10 | Glycerin | 15 | 290.0 | 15 | 1.50 | G50 | × | Crack | × |
| Example 1 | Pro. Liq. 7 | Cat. Silica | 10 | Glycerin | 20 | 290.0 | 20 | 2.00 | G50 | ○ | Good | ○ |
| Example 2 | Pro. Liq. 8 | Cat. Silica | 10 | Glycerin | 25 | 290.0 | 25 | 2.50 | G50 | ○ | Good | ○ |
| Comp. Ex. 7 | Pro. Liq. 9 | Cat. Silica | 15 | Glycerin | 10 | 290.0 | 10 | 0.67 | G50 | × | Whitening | × |
| Comp. Ex. 8 | Pro. Liq. 10 | Cat. Silica | 15 | Glycerin | 15 | 290.0 | 15 | 1.00 | G50 | × | Whitening | × |
| Comp. Ex. 9 | Pro. Liq. 11 | Cat. Silica | 15 | Glycerin | 20 | 290.0 | 20 | 1.33 | G50 | × | Partly Flocculate | × |
| Example 3 | Pro. Liq. 12 | Cat. Silica | 15 | Glycerin | 25 | 290.0 | 25 | 1.67 | G50 | ○ | Good | ○ |
| Comp. Ex. 10 | Pro. Liq. 13 | Cat. Silica | 15 | 1,3-butanediol | 10 | 207.5 | 0 | 0.00 | G50 | × | Whitening, Crack | × |
| Comp. Ex. 11 | Pro. Liq. 14 | Cat. Silica | 15 | 1,3-butanediol | 15 | 207.5 | 0 | 0.00 | G50 | × | Whitening, Crack | × |
| Comp. Ex. 12 | Pro. Liq. 15 | Cat. Silica | 15 | 1,3-butanediol | 20 | 207.5 | 0 | 0.00 | G50 | × | Whitening, Crack | × |
| Comp. Ex. 13 | Pro. Liq. 16 | Cat. Silica | 15 | 1,3-butanediol | 25 | 207.5 | 0 | 0.00 | G50 | × | Whitening, Crack | × |
| Comp. Ex. 14 | Pro. Liq. 17 | Cat. Silica | 15 | Propylene glycol | 25 | 188.2 | 0 | 0.00 | G50 | × | Crack | × |
| Comp. Ex. 15 | Pro. Liq. 18 | Cat. Silica | 15 | Ethylene glycol | 25 | 197.6 | 0 | 0.00 | G50 | × | Crack | × |
| Comp. Ex. 16 | Pro. Liq. 19 | Cat. Silica | 15 | 2-methyl-2,4-pentanediol | 25 | 198.0 | 0 | 0 | G50 | × | Whitening | × |
| Comp. Ex. 17 | Pro. Liq. 20 | Cat. Silica | 15 | N-methyl-2-pyrrolidone | 25 | 202.0 | 0 | 0 | G50 | × | Whitening, Crack | × |

Pro. Liq.: Processing Liquid Cat. Silica: Cationic Silica

*1) Boiling point of water-soluble organic solvent

*2) Content of water-soluble organic solvent having boiling point of 210 °C or more

[ Table1-2]

| | | Fine Particles | | Water-Soluble Organic Solvent | | B.P. °C *1) | Content (b) *2) | (b)/(a) | Surfac-tant | Evaluation of Moisture Retention | | Evaluation of Ejection Stability after Leaving |
|---|---|---|---|---|---|---|---|---|---|---|---|---|
| | | Type | Content (a) wt % | Type | Content wt % | | | | | | Residue Condition after Heating | |
| Comp. Ex. 18 | Pro. Liq. 21 | Cat. Silica | 15 | 2,2-dimethyl-1,3-propanediol | 25 | 208.0 | 0 | 0 | G50 | × | Whitening | × |
| Comp. Ex. 19 | Pro. Liq. 22 | Cat. Silica | 15 | 1,6-hexanediol | 25 | 208.0 | 0 | 0 | G50 | × | Crack Separation | × |
| Example 4 | Pro. Liq. 23 | Cat. Silica | 15 | 3-methylpentane-1,3,5-triol | 25 | 216.0 | 25 | 1.67 | G50 | ○ | Good | ○ |
| Example 5 | Pro. Liq. 24 | Cat. Silica | 15 | Dipropylene glycol | 25 | 223.0 | 25 | 1.67 | G50 | ○ | Good | ○ |
| Example 6 | Pro. Liq. 25 | Cat. Silica | 15 | 1,5-pentanediol | 25 | 239.0 | 25 | 1.67 | G50 | ○ | Good | ○ |
| Example 7 | Pro. Liq. 26 | Cat. Silica | 15 | Diethylene glycol | 25 | 244.0 | 25 | 1.67 | G50 | ○ | Good | ○ |
| Example 8 | Pro. Liq. 27 | Cat. Silica | 15 | 2-pyrrolidone | 25 | 245.0 | 25 | 1.67 | G50 | ○ | Good | ○ |
| Example 9 | Pro. Liq. 28 | Cat. Silica | 15 | Triethylene glycol | 25 | 285.0 | 25 | 1.67 | G50 | ○ | Good | ○ |
| Example 10 | Pro. Liq. 29 | Cat. Silica | 15 | 2-ethyl-2-(hydroxymethyl)-1,3-propanediol | 25 | 295.0 | 25 | 1.67 | G50 | ○ | Good | ○ |
| Example 11 | Pro. Liq. 30 | Cat. Silica | 15 | 2-pyrrolidone/ diethylene glycol | 12.5/ 12.5 | 245.0/ 244.0 | 25 | 1.67 | G50 | ○ | Good | ○ |
| Example 12 | Pro. Liq. 31 | Cat. Silica | 15 | 2-pyrrolidone/ triethylene glycol | 12.5/ 12.5 | 245.0/ 285.0 | 25 | 1.67 | G50 | ○ | Good | ○ |
| Example 13 | Pro. Liq. 32 | Cat. Silica | 15 | 2-pyrrolidone/ 2-ethyl-2-(hydroxymethyl)-1,3-propanediol | 12.5/ 12.5 | 245.0/ 295.0 | 25 | 1.67 | G50 | ○ | Good | ○ |
| Example 14 | Pro. Liq. 33 | Cat. Silica | 15 | 2-pyrrolidone/ 3-methylpentane-1,3,5-triol | 12.5/ 12.5 | 245.0/ 216.0 | 25 | 1.67 | G50 | ○ | Good | ○ |

Pro. Liq.: Processing Liquid Cat. Silica: Cationic Silica

*1) Boiling point of water-soluble organic solvent

*2) Content of water-soluble organic solvent having boiling point of 210 °C or more

[ Table 1-3]

| | | Fine Particles | | Water-Soluble Organic Solvent | | B.P. °C *1) | Content (b) *2) | (b)/(a) | Surfactant | Evaluation of Moisture Retention | | Evaluation of Ejection Stability after Leaving |
|---|---|---|---|---|---|---|---|---|---|---|---|---|
| | | Type | Content (a) wt % | Type | Content wt % | | | | | Residue Condition after Heating | | |
| Example 15 | Pro. Liq. 34 | Alumina sol | 15 | Glycerin | 25 | 290.0 | 25 | 1.67 | G50 | ○ | Good | ○ |
| Example 16 | Pro. Liq. 35 | Cat. Silica | 15 | Glycerin | 25 | 290.0 | 25 | 1.67 | TOC | ○ | Good | ○ |
| Example 17 | Pro. Liq. 36 | Coat. Silica | 15 | Glycerin | 25 | 290.0 | 25 | 1.67 | G50 | ○ | Good | ○ |
| Comp. Ex. 20 | Pro. Liq. 37 | Cat. Silica | 20 | Glycerin | 25 | 290.0 | 25 | 1.25 | G50 | × | Whitening | × |
| Comp. Ex. 21 | Pro. Liq. 38 | Cat. Silica | 20 | Glycerin | 30 | 290.0 | 30 | 1.50 | G50 | × | Whitening | × |
| Example 18 | Pro. Liq. 39 | Cat. Silica | 20 | Glycerin | 35 | 290.0 | 35 | 1.75 | G50 | ○ | Good | ○ |
| Comp. Ex. 22 | Pro. Liq. 40 | Cat. Silica | 25 | Glycerin | 30 | 290.0 | 30 | 1.20 | G50 | × | Whitening | × |
| Comp. Ex. 23 | Pro. Liq. 41 | Cat. Silica | 25 | Glycerin | 35 | 290.0 | 35 | 1.40 | G50 | × | Whitening | × |
| Example 19 | Pro. Liq. 42 | Cat. Silica | 25 | Glycerin | 40 | 290.0 | 40 | 1.60 | G50 | ○ | Good | ○ |
| Comp. Ex. 24 | Pro. Liq. 43 | Cat. Silica | 30 | Glycerin | 35 | 290.0 | 35 | 1.17 | G50 | × | Whitening | × |
| Comp. Ex. 25 | Pro. Liq. 44 | Cat. Silica | 30 | Glycerin | 40 | 290.0 | 40 | 1.33 | G50 | × | Whitening | × |
| Comp. Ex. 26 | Pro. Liq. 45 | Cat. Silica | 30 | Glycerin | 45 | 290.0 | 45 | 1.50 | G50 | × | Whitening | × |
| Example 20 | Pro. Liq. 46 | Cat. Silica | 30 | Glycerin | 50 | 290.0 | 50 | 1.67 | G50 | ○ | Good | ○ |
| Comp. Ex. 27 | Pro. Liq. 47 | Cat. Silica | 35 | Glycerin | 40 | 290.0 | 40 | 1.14 | G50 | × | Whitening | × |
| Comp. Ex. 28 | Pro. Liq. 48 | Cat. Silica | 35 | Glycerin | 45 | 290.0 | 45 | 1.29 | G50 | × | Whitening | × |
| Comp. Ex. 29 | Pro. Liq. 49 | Cat. Silica | 35 | Glycerin | 50 | 290.0 | 50 | 1.43 | G50 | × | Whitening | × |
| Example 21 | Pro. Liq. 50 | Cat. Silica | 35 | Glycerin | 55 | 290.0 | 55 | 1.57 | G50 | ○ | Good | ○ |
| Comp. Ex. 30 | Pro. Liq. 51 | Cat. Silica | 40 | Glycerin | 45 | 290.0 | 45 | 1.13 | G50 | × | Gellation from Initial | × |
| Comp. Ex. 31 | Pro. Liq. 52 | Cat. Silica | 40 | Glycerin | 50 | 290.0 | 50 | 1.25 | G50 | × | Gellation from Initial | × |
| Comp. Ex. 32 | Pro. Liq. 53 | Cat. Silica | 40 | Glycerin | 55 | 290.0 | 55 | 1.38 | G50 | × | Gellation from Initial | × |
| Comp. Ex. 33 | Pro. Liq. 54 | Cat. Silica | 40 | Glycerin | 60 | 290.0 | 60 | 1.50 | G50 | × | Gellation from Initial | × |

Pro. Liq.: Processing Liquid Cat. Silica: Cationic Silica

*1) Boiling point of water-soluble organic solvent

*2) Content of water-soluble organic solvent having boiling point of 210 °C or more

(4) Evaluation of Image Quality for Examples 22 to 44 and Comparative Examples 34 to 52

Each of the processing liquids and recording liquid of Table 2-1 and Table 2-2 was filled into the ink cartridge (Type J300; Ricoh Co., Ltd.) for Ipsio Jet 300 (Ricoh Co., Ltd.) and mounted to Ipsio Jet 300, and printing test was conducted. The bleedings at letter portions were evaluated subjectively based on the following criteria. The results are shown in Table 2-1 and Table 2-2.

Rank 5: No bleeding exists at all.
Rank 4: Bleeding exists slightly
Rank 3: Bleeding exists, but no problem exists in actual.
Rank 2: Somewhat much bleeding exists.
Rank 1: Much bleeding exists.

In addition, 60° gloss level was measured at solid black portions. The results are shown in Table 2-1 and Table 2-2.
Measuring device: Gloss Measuring Device (by BYK Gardner Co.)

The deposited amounts of the recording liquid and the processing liquid were controlled to the following levels.

Deposited amount of recording liquid: 11.0 $g/m^2$
Deposited amount of processing liquid: 13.0 $g/m^2$

[ Table 2-1]

| | | Fine Particles | | Water-Soluble Organic Solvent | | Recording Liquid | | Evaluation of Image Quality | 60° Gloss Level |
|---|---|---|---|---|---|---|---|---|---|
| | | Type of Particles | Content wt % | Type of Solvent | Content wt % | | Coloring Material | | |
| Comp. Ex. 34 | Pro. Liq. 1 | Cat. Silica | 5 | Glycerin | 10 | Rec. Liq. 1 | Pigment | 1 | 1.86 |
| Comp. Ex. 35 | Pro. Liq. 2 | Cat. Silica | 5 | Glycerin | 15 | Rec. Liq. 1 | Pigment | 1 | 1.85 |
| Comp. Ex. 36 | Pro. Liq. 3 | Poly. Silica | 5 | Glycerin | 20 | Rec. Liq. 1 | Pigment | 1 | 1.90 |
| Comp. Ex. 37 | Pro. Liq. 4 | Cat. Silica | 5 | Glycerin | 25 | Rec. Liq. 1 | Pigment | 1 | 1.92 |
| Comp. Ex. 38 | Pro. Liq. 5 | Cat. Silica | 10 | Glycerin | 10 | Rec. Liq. 1 | Pigment | 3 | 2.07 |
| Comp. Ex. 39 | Pro. Liq. 6 | Cat. Silica | 10 | Glycerin | 15 | Rec. Liq. 1 | Pigment | 3 | 2.05 |
| Example 22 | Pro. Liq. 7 | Cat. Silica | 10 | Glycerin | 20 | Rec. Liq. 1 | Pigment | 4 | 2.09 |
| Example 23 | Pro. Liq. 8 | Cat. Silica | 10 | Glycerin | 25 | Rec. Liq. 1 | Pigment | 4 | 2.03 |
| Comp. Ex. 40 | Pro. Liq. 9 | Cat. Silica | 15 | Glycerin | 10 | Rec. Liq. 1 | Pigment | 4 | 2.73 |
| Comp. Ex. 41 | Pro. Liq. 10 | Cat. Silica | 15 | Glycerin | 15 | Rec. Liq. 1 | Pigment | 4 | 2.81 |
| Comp. Ex. 42 | Pro. Liq. 11 | Cat. Silica | 15 | Glycerin | 20 | Rec. Liq. 1 | Pigment | 5 | 2.90 |
| Example 24 | Pro. Liq. 12 | Cat. Silica | 15 | Glycerin | 25 | Rec. Liq. 1 | Pigment | 5 | 2.80 |
| Example 25 | Pro. Liq. 23 | Cat. Silica | 15 | 3-methylpentane-1,3,5-triol | 25 | Rec. Liq. 1 | Pigment | 5 | 2.79 |
| Example 26 | Pro. Liq. 24 | Cat. Silica | 15 | Dipropylene glycol | 25 | Rec. Liq. 1 | Pigment | 5 | 2.95 |
| Example 27 | Pro. Liq. 25 | Cat. Silica | 15 | 1,5-pentanediol | 25 | Rec. Liq. 1 | Pigment | 5 | 2.77 |
| Example 28 | Pro. Liq. 26 | Cat. Silica | 15 | Diethylene glycol | 25 | Rec. Liq. 1 | Pigment | 5 | 2.84 |
| Example 29 | Pro. Liq. 27 | Cat. Silica | 15 | 2-pyrrolidone | 25 | Rec. Liq. 1 | Pigment | 5 | 2.94 |
| Example 30 | Pro. Liq. 28 | Cat. Silica | 15 | Triethylene glycol | 25 | Rec. Liq. 1 | Pigment | 5 | 2.88 |
| Example 31 | Pro. Liq. 29 | Cat. Silica | 15 | 2-ethyl-2-(hydroxymethyl)-1,3-propanediol | 25 | Rec. Liq. 1 | Pigment | 5 | 2.87 |
| Example 32 | Pro. Liq. 30 | Cat. Silica | 15 | 2-pyrrolidone/ diethylene glycol | 12.5/ 12.5 | Rec. Liq. 1 | Pigment | 5 | 2.90 |
| Example 33 | Pro. Liq. 31 | Cat. Silica | 15 | 2-pyrrolidone/ triethylene glycol | 12.5/ 12.5 | Rec. Liq. 1 | Pigment | 5 | 2.79 |

Pro. Liq.: Processing Liquid  Cat. Silica: Cationic Silica  Poly. Silica: Polyallylamine Coated Silica
Rec. Liq: Recording Liquid

[ Table 2-2]

| | | Fine Particles | | Water-Soluble Organic Solvent | | Recording Liquid | | Evaluation of Image Quality | 60° Gloss Level |
|---|---|---|---|---|---|---|---|---|---|
| | | Type of Particles | Content wt % | Type of Solvent | Content wt % | | Coloring Material | | |
| Example 34 | Pro. Liq. 32 | Cat. Silica | 15 | 2-pyrrolidone/2-ethyl-2-(hydroxymethyl)-1,3-propanediol | 12.5/ 12.5 | Rec. Liq. 1 | Pigment | 5 | 2.99 |
| Example 35 | Pro. Liq. 33 | Cat. Silica | 15 | 2-pyrrolidone/ 3-methylpentane-1,3,5-triol | 12.5/ 12.5 | Rec. Liq. 1 | Pigment | 5 | 2.84 |
| Example 36 | Pro. Liq. 34 | Alumina sol | 15 | Glycerin | 25 | Rec. Liq. 1 | Pigment | 5 | 2.64 |
| Example 37 | Pro. Liq. 35 | Cat. Silica | 15 | Glycerin | 25 | Rec. Liq. 1 | Pigment | 5 | 2.81 |
| Example 38 | Pro. Liq. 36 | Poly. Silica | 15 | Glycerin | 25 | Rec. Liq. 1 | Pigment | 5 | 2.88 |
| Example 39 | Pro. Liq. 12 | Cat. Silica | 15 | Glycerin | 25 | Rec. Liq. 2 | Pigment | 4 | 2.81 |
| Example 40 | Pro. Liq. 12 | Cat. Silica | 15 | Glycerin | 25 | Rec. Liq. 3 | Pigment/Dye | 5 | 2.61 |
| Comp. Ex. 43 | Pro. Liq. 37 | Cat. Silica | 20 | Glycerin | 25 | Rec. Liq. 1 | Pigment | 5 | 2.77 |
| Comp. Ex. 44 | Pro. Liq. 38 | Cat. Silica | 20 | Glycerin | 30 | Rec. Liq. 1 | Pigment | 5 | 2.68 |
| Example 41 | Pro. Liq. 39 | Cat. Silica | 20 | Glycerin | 35 | Rec. Liq. 1 | Pigment | 5 | 2.64 |
| Comp. Ex. 45 | Pro. Liq. 40 | Cat. Silica | 25 | Glycerin | 30 | Rec. Liq. 1 | Pigment | 5 | 2.80 |
| Comp. Ex. 46 | Pro. Liq. 41 | Cat. Silica | 25 | Glycerin | 35 | Rec. Liq. 1 | Pigment | 5 | 2.83 |
| Example 42 | Pro. Liq. 42 | Cat. Silica | 25 | Glycerin | 40 | Rec. Liq. 1 | Pigment | 5 | 2.89 |
| Comp. Ex. 47 | Pro. Liq. 43 | Cat. Silica | 30 | Glycerin | 35 | Rec. Liq. 1 | Pigment | 5 | 2.64 |
| Comp. Ex. 48 | Pro. Liq. 44 | Cat. Silica | 30 | Glycerin | 40 | Rec. Liq. 1 | Pigment | 5 | 2.91 |
| Comp. Ex. 49 | Pro. Liq. 45 | Cat. Silica | 30 | Glycerin | 45 | Rec. Liq. 1 | Pigment | 5 | 2.76 |
| Example 43 | Pro. Liq. 46 | Cat. Silica | 30 | Glycerin | 50 | Rec. Liq. 1 | Pigment | 5 | 2.81 |
| Comp. Ex. 50 | Pro. Liq. 47 | Cat. Silica | 35 | Glycerin | 40 | Rec. Liq. 1 | Pigment | 5 | 2.90 |
| Comp. Ex. 51 | Pro. Liq. 48 | Cat. Silica | 35 | Glycerin | 45 | Rec. Liq. 1 | Pigment | 5 | 2.81 |
| Comp. Ex. 52 | Pro. Liq. 49 | Cat. Silica | 35 | Glycerin | 50 | Rec. Liq. 1 | Pigment | 5 | 2.82 |
| Example 44 | Pro. Liq. 50 | Cat. Silica | 35 | Glycerin | 55 | Rec. Liq. 1 | Pigment | 5 | 2.95 |

Pro. Liq.: Processing Liquid Cat. Silica: Cationic Silica Poly. Silica: Polyallylamine Coated Silica
Rec. Liq: Recording Liquid

(5) Evaluation of Preservation Stability for Examples 45 to 61

Each of the processing liquids of Table 3 was filled into the ink cartridge (Type J300; Ricoh Co., Ltd.) for Ipsio Jet 300 and was closely sealed, then was allowed to stand for 10 days in five kinds of environmental conditions (**). The processing liquids were sampled and the preservation stability was evaluated. They were evaluated quantitatively based on the following criteria. The results are shown in Table 3-1 to Table 3-3.

○: No item exists with respect to variation coefficient exceeding 10 % between before and after of allowing to stand.
Δ: One or two items exist with respect to variation coefficient exceeding 10 % between before and after of allowing to stand.
×: Three or two items exist with respect to variation coefficient exceeding 10 % between before and after of allowing to stand.

Measuring of viscosity: R-type Rotating Viscometer (by Toki Sangyo Co., Ltd.)
Measuring of particle size: Microtrac UPA150 (by Nikkiso Co., Ltd.)

** (i) allowing to stand at room temperature (ii) allowing to stand in an isothermal bath at 50 °C (iii) allowing to stand in an isothermal bath at 70 °C (iv) allowing to stand in an isothermal bath at -20 °C (v) allowing to stand in an isothermal bath that is programmed to repeat -20 °C and 50 °C alternatively every day

[ Table 3-1]

| | | Fine Particles | Water-Soluble Organic Solvent | | Viscosity mPa•sec | Viscosity Variation Coefficient % | Particle Size of Ink D50 nm | Particle Size of Ink Variation Coefficient % | Evaluation of Preservation Stability |
|---|---|---|---|---|---|---|---|---|---|
| Example 45 | Processing Liquid 7 | Cationic Silica 10 wt % | Glycerin 20 wt % | Initial | 3.97 | 0.0 | 63.0 | 0.0 | △ |
| | | | | 10 days R.T. | 3.87 | -2.5 | 64.5 | 2.4 | |
| | | | | 10 days 50°C | 3.98 | 0.3 | 66.3 | 5.2 | |
| | | | | 10 days 70 °C | 4.33 | 9.1 | 65.0 | 3.2 | |
| | | | | 10 days -20/50 °C | 4.46 | 12.3 * | 62.5 | -0.8 | |
| Example 46 | Processing Liquid 8 | Cationic Silica 10 wt % | Glycerin 25 wt % | Initial | 5.01 | 0.0 | 79.2 | 0.0 | △ |
| | | | | 10 days R.T. | 4.98 | -0.6 | 73.5 | -7.2 | |
| | | | | 10 days 50°C | 5.22 | 4.2 | 76.3 | -3.7 | |
| | | | | 10 days 70 °C | 5.38 | 7.4 | 80.3 | 1.4 | |
| | | | | 10 days -20/50 °C | 6.55 | 30.7 * | 81.6 | 3.0 | |
| Example 47 | Processing Liquid 12 | Cationic Silica 15 wt % | Glycerin 25 wt % | Initial | 8.01 | 0.0 | 71.0 | 0.0 | △ |
| | | | | 10 days R.T. | 8.69 | 8.5 | 69.7 | -1.8 | |
| | | | | 10 days 50°C | 8.73 | 9.0 | 70.6 | -0.6 | |
| | | | | 10 days 70 °C | 8.99 | 12.2 * | 74.0 | 4.2 | |
| | | | | 10 days -20/50 °C | 13.14 | 64.0 * | 68.6 | -3.4 | |
| Example 48 | Processing Liquid 23 | Cationic Silica 15 wt % | 3-methylpentane-1,3,5-triol 25 wt % | Initial | 8.56 | 0.0 | 75.4 | 0.0 | △ |
| | | | | 10 days R.T. | 8.72 | 1.9 | 77.6 | 2.9 | |
| | | | | 10 days 50°C | 8.84 | 3.3 | 76.3 | 1.2 | |
| | | | | 10 days 70°C | 9.88 | 15.4 * | 80.6 | 6.9 | |
| | | | | 10 days -20 °C | 8.40 | -1.9 | 74.2 | -1.6 | |
| | | | | 10 days -20/50 °C | 7.00 | -18.2 * | 75.5 | 0.1 | |
| Example 49 | Processing Liquid 24 | Cationic Silica 15 wt % | Dipropylene gylcol 25 wt % | Initial | 8.62 | 0.0 | 69.3 | 0.0 | △ |
| | | | | 10 days R.T. | 8.56 | -0.7 | 70.5 | 1.7 | |
| | | | | 10 days 50°C | 8.70 | 0.9 | 70.6 | 1.9 | |
| | | | | 10 days 70°C | 7.86 | -8.8 | 75.9 | 9.5 | |
| | | | | 10 days -20 °C | 7.01 | -18.7 * | 69.5 | 0.3 | |
| | | | | 10 days -20/50 °C | 7.96 | -7.7 | 70.6 | 1.9 | |
| Example 50 | Processing Liquid 25 | Cationic Silica 15 wt % | 1,5-pentanediol 25 wt % | Initial | 8.94 | 0.0 | 61.3 | 0.0 | △ |
| | | | | 10 days R.T. | 8.61 | 1.4 | 64.3 | 4.9 | |
| | | | | 10 days 50°C | 8.55 | 0.7 | 64.2 | 4.7 | |
| | | | | 10 days 70°C | 8.79 | 3.5 | 63.2 | 3.1 | |
| | | | | 10 days -20 °C | 5.89 | -30.6 * | 54.3 | -11.4 | |
| | | | | 10 days -20/50 °C | 7.76 | -8.6 | 65.1 | 6.2 | |

* : 10 % or more of variation coefficient

[ Table 3-2]

| | | Fine Particles | Water-Soluble Organic Solvent | | Viscosity | | Particle Size of Ink | | Evaluation of Preservation Stability |
|---|---|---|---|---|---|---|---|---|---|
| | | | | | mPa·sec | Variation Coefficient % | D50 nm | Variation Coefficient % | |
| Example 51 | Processing Liquid 26 | Cationic Silica 15 wt % | Diethylene glycol 25 wt % | Initial | 8.42 | 0.0 | 71.2 | 0.0 | △ |
| | | | | 10 days R.T. | 8.33 | -1.1 | 69.0 | -3.1 | |
| | | | | 10 days 50°C | 8.45 | 0.4 | 70.3 | -1.3 | |
| | | | | 10 days 70°C | 7.07 | -16.0 * | 74.8 | 5.1 | |
| | | | | 10 days -20 °C | 7.29 | -13.4 * | 70.0 | -1.7 | |
| | | | | 10 days -20/50 °C | 7.84 | -6.9 | 71.4 | 0.3 | |
| Example 52 | Processing Liquid 27 | Cationic Silica 15 wt % | 2-pyrrolidone 25 wt % | Initial | 7.53 | 0.0 | 60.1 | 0.0 | △ |
| | | | | 10 days R.T. | 7.43 | -1.3 | 62.8 | 4.5 | |
| | | | | 10 days 50°C | 7.46 | -0.9 | 65.3 | 8.7 | |
| | | | | 10 days 70°C | 78.0 | 3.6 | 62.0 | 3.2 | |
| | | | | 10 days -20 °C | 5.67 | -24.7 * | 52.2 | -13.1 * | |
| | | | | 10 days -20/50 °C | 7.24 | -3.9 | 64.1 | 6.7 | |
| Example 53 | Processing Liquid 28 | Cationic Silica 15 wt % | Triethylene glycol 25 wt % | Initial | 9.34 | 0.0 | 81.0 | 0.0 | △ |
| | | | | 10 days R.T. | 9.28 | -0.6 | 80.0 | -1.2 | |
| | | | | 10 days 50°C | 9.37 | 0.3 | 80.0 | -1.2 | |
| | | | | 10 days 70°C | 10.98 | 17.6 * | 89.4 | 10.4 * | |
| | | | | 10 days -20 °C | 9.42 | 0.9 | 80.5 | -0.6 | |
| | | | | 10 days -20/50 °C | 9.39 | 0.5 | 84.8 | 4.7 | |
| Example 54 | Processing Liquid 29 | Cationic Silica 15 wt % | 2-ethyl-2-(hydroxymethyl)-1,3-propanediol 20 wt % | Initial | 8.35 | 0.0 | 71.6 | 0.0 | △ |
| | | | | 10 days R.T. | 8.30 | -0.6 | 74.0 | 3.4 | |
| | | | | 10 days 50°C | 6.91 | -17.2 * | 76.0 | 6.1 | |
| | | | | 10 days 70°C | 9.51 | 13.9 * | 77.4 | 8.1 | |
| | | | | 10 days -20 °C | 8.46 | 1.3 | 72.1 | 0.7 | |
| | | | | 10 days -20/50 °C | 8.43 | 1.0 | 76.7 | 7.1 | |
| Example 55 | Processing Liquid 30 | Cationic Silica 15 wt % | 2-pyrrolidone 12.5 wt % Diethylene glycol 12.5 wt % | Initial | 7.99 | 00 | 67.3 | 0.0 | ○ |
| | | | | 10 days R.T. | 7.94 | -0.6 | 65.1 | -3.3 | |
| | | | | 10 days 50°C | 8.06 | 0.9 | 66.8 | -0.7 | |
| | | | | 10 days 70°C | 8.27 | 3.5 | 63.9 | -5.1 | |
| | | | | 10 days -20 °C | 8.68 | 8.6 | 66.9 | -0.6 | |
| | | | | 10 days -20/50 °C | 8.23 | 3.0 | 66.6 | -1.0 | |

* : 10 % or more of variation coefficient

[ Table 3-3]

| | | Fine Particles | Water-Soluble Organic Solvent | | Viscosity | | Particle Size of Ink | | Evaluation of Preservation Stability |
|---|---|---|---|---|---|---|---|---|---|
| | | | | | mPa•sec | Variation Coefficient % | D50 nm | Variation Coefficient % | |
| Example 56 | Processing Liquid 31 | Cationic Silica 15 wt % | 2-pyrrolidone 12.5 wt % Triethylene glycol 12.5 wt % | Initial | 8.44 | 0.0 | 71.4 | 0.0 | ○ |
| | | | | 10 days R.T. | 8.33 | -1.0 | 68.1 | -4.6 | |
| | | | | 10 days 50°C | 8.41 | -0.4 | 72.6 | 1.7 | |
| | | | | 10 days 70°C | 8.89 | 5.3 | 66.9 | -6.3 | |
| | | | | 10 days -20 °C | 8.79 | 4.1 | 65.1 | -8.8 | |
| | | | | 10 days -20/50 °C | 8.54 | 1.2 | 69.6 | -2.5 | |
| Example 57 | Processing Liquid 32 | Cationic Silica 15 wt % | 2-pyrrolidone 12.5 wt % 2-ethyl-2-(hydroxymethyl)-1,3-propanediol 12.5 wt % | Initial | 9.10 | 0.0 | 78.1 | 0.0 | ○ |
| | | | | 10 days R.T. | 9.05 | -0.5 | 74.5 | -4.6 | |
| | | | | 10 days 50°C | 9.07 | -0.3 | 70.5 | -9.7 | |
| | | | | 10 days 70°C | 9.62 | 5.7 | 79.0 | 1.2 | |
| | | | | 10 days -20 °C | 9.11 | 0.1 | 85.6 | 9.6 | |
| | | | | 10 days -20/50 °C | 9.17 | 0.8 | 74.1 | -5.1 | |
| Example 58 | Processing Liquid 33 | Cationic Silica 15 wt % | 2-pyrrolidone 12.5 wt % 3-methylpentane-1,3,5-triol | Initial | 9.40 | 0.0 | 85.9 | 0.0 | ○ |
| | | | | 10 days R.T. | 9.34 | -0.6 | 81.4 | -5.2 | |
| | | | | 10 days 50°C | 9.35 | -0.5 | 79.3 | -7.7 | |
| | | | | 10 days 70°C | 9.82 | 4.5 | 82.7 | -3.7 | |
| | | | | 10 days -20 °C | 10.32 | 9.8 | 94.4 | 9.9 | |
| | | | | 10 days -20/50 °C | 9.56 | 1.7 | 83.0 | -3.4 | |
| Example 59 | Processing Liquid 34 | Alumina sol 15 wt % | Glycerin 25 wt % | Initial | 7.81 | 0.0 | 168.8 | 0.0 | △ |
| | | | | 10 days R.T. | 7.96 | 1.9 | 170.2 | 0.8 | |
| | | | | 10 days 50°C | 8.09 | 3.6 | 198.4 | 17.5 * | |
| | | | | 10 days 70 °C | 8.26 | 5.8 | 153.6 | -9.0 | |
| | | | | 10 days -20/50 °C | 8.26 | 5.8 | 244.2 | 44.7 * | |
| Example 60 | Processing Liquid 35 | Cationic Silica 15 wt % | Glycerin 25 wt % | Initial | 8.01 | 0.0 | 71.0 | 0.0 | △ |
| | | | | 10 days R.T. | 8.69 | 8.5 | 69.7 | -1.8 | |
| | | | | 10 days 50°C | 8.73 | 9.0 | 70.6 | -0.6 | |
| | | | | 10 days 70 °C | 8.99 | 12.2 * | 74.0 | 4.2 | |
| | | | | 10 days -20/50 °C | 13.14 | 64.0 * | 68.6 | -3.4 | |
| Example 61 | Processing Liquid 36 | Polyallyl amine coated Silica 15 wt % | Glycerin 25 wt % | Initial | 7.86 | 0.0 | 123.5 | 0.0 | △ |
| | | | | 10 days R.T. | 7.95 | 1.1 | 125.6 | 1.7 | |
| | | | | 10 days 50°C | 8.63 | 9.8 | 129.3 | 4.7 | |
| | | | | 10 days 70 °C | 8.95 | 13.9 * | 139.8 | 13.2 * | |
| | | | | 10 days -20/50 °C | 8.01 | 1.9 | 130.1 | 5.3 | |

* : 10 % or more of variation coefficient

As explained above specifically and particularly, the clogging of the head of processing liquid may be effectively prevented by enhancing moisture retention ability in accordance with the present invention, and image qualities with

respect to reducing feathering, decreasing color bleeding, raising image density, decreasing offset density, raising friction resistance, and enhancing quick-drying ability may be improved by incorporating reactive component(s) at above a certain amount. Moreover, gloss level may be enhanced, and also saturation of color images may be increased. The image quality may be further improved through enhancing reactivity by incorporating specific reactive component (s). In addition, incorporating water-soluble organic solvent that is less volatile and highly compatible with fine particles may lead to suppressing clogging of the head of processing liquid.

Two sorts of water-soluble organic solvents may improve the preservation stability of processing liquid at lower and higher temperatures by compensating the properties of the respective solvent. Further, reducing feathering, decreasing color bleeding, and enhancing quick-drying ability may be attained by enhancing the infiltrating ability of the processing liquid thereby to make the processing liquid absorbed by paper instantly.

Reaction of cationic surfactant with fine particles may lead to improving image qualities with respect to reducing feathering, decreasing color bleeding, raising image density, decreasing offset density, raising friction resistance, and enhancing quick-drying ability. In addition, incorporation of antiseptic-antimildew agent may lead to stabilizing the liquid property of processing liquid at prolonged preservation.

Combination of a processing liquid and a recording liquid containing pigment or dye or both of them may provide clear recorded matter. Further, enhancing the moisture retention ability of recording liquid may lead to preventing clogging of the head for recording liquid.

Reducing feathering, decreasing color bleeding, and enhancing quick-drying ability may be attained by enhancing the infiltrating ability of the recording liquid thereby to make the recording liquid absorbed by paper instantly. In addition, incorporation of antiseptic-antimildew agent may lead to stabilizing the liquid property of recording liquid at prolonged preservation.

In accordance with the present invention, images may be formed that satisfy reduced feathering, decreased color bleeding, raised image density, decreased offset density, raised friction resistance, and enhanced quick-drying ability at the same time. In addition, recorded matter may be provided that satisfies reduced feathering, decreased color bleeding, raised image density, decreased offset density, raised friction resistance, and enhanced quick-drying ability at the same time. Moreover, the recording liquid and the processing liquid can be mounted to the recording apparatus without spilling the liquids.

## Claims

**1.** A processing liquid for ink-jet recording comprising:

fine particles that react with a coloring material when the processing liquid contacts with a recording liquid that comprises the coloring material and water, and
a water-soluble organic solvent having a boiling point of 210 °C or more,

wherein the content (a wt %) of fine particles and the content (b wt %) of the water-soluble organic solvent having a boiling point of 210 °C or more satisfy the following relation:

$$10 \leq a < 40,\ b/a > 1.50.$$

**2.** The processing liquid for ink-jet recording according to claim 1, wherein the content (a wt %) and the content (b wt %) satisfy the following relation:

$$15 \leq a < 40,\ b/a > 1.50.$$

**3.** The processing liquid for ink-jet recording according to claim 1, wherein the fine particles are inorganic fine particles.

**4.** The processing liquid for ink-jet recording according to claim 3, wherein the inorganic fine particles are cationic colloidal silica.

**5.** The processing liquid for ink-jet recording according to claim 1, wherein the water-soluble organic solvent is at least one compound selected from the group consisting of 2-pyrrolidone, diethylene glycol, triethylene glycol, glycerin, 3-methylpentane-1,3,5-triol, and 2-ethyl-2-(hydroxymethyl)-1,3-propanediol.

6. The processing liquid for ink-jet recording according to claim 1, wherein the processing liquid comprises at least two water-soluble organic solvents having a boiling point of 210 °C or more.

7. The processing liquid for ink-jet recording according to claim 1, wherein the processing liquid comprises a surfactant.

8. The processing liquid for ink-jet recording according to claim 7, wherein the surfactant is a cationic compound.

9. The processing liquid for ink-jet recording according to claim 1, wherein the processing liquid comprises an antiseptic-antimildew agent.

10. An ink set for ink-jet recording comprising:

a recording liquid that contains a coloring material and water, and
a processing liquid for ink-jet recording that contains fine particles reactive with the coloring material when the processing liquid contacts with the recording liquid, and a water-soluble organic solvent having a boiling point of 210 °C or more,

wherein the content (a wt %) of fine particles and the content (b wt %) of the water-soluble organic solvent having a boiling point of 210 °C or more satisfy the following relation:

$$10 \leq a < 40, b/a > 1.50.$$

11. The ink set for ink-jet recording according to claim 10, wherein the coloring material is at least one of pigments and dyes.

12. The ink set for ink-jet recording according to claim 11, wherein the coloring material is one of pigments.

13. The ink set for ink-jet recording according to claim 10, wherein the fine particles are cationic and the coloring material is anionic.

14. The ink set for ink-jet recording according to claim 10, wherein the recording liquid comprises a water-soluble organic solvent.

15. The ink set for ink-jet recording according to claim 10, wherein the recording liquid comprises a surfactant.

16. The ink set for ink-jet recording according to claim 10, wherein the recording liquid comprises an antiseptic-antimildew agent.

17. An image forming process for ink-jet recording comprising:

applying a recording liquid that contains a coloring material and water to a recording medium,
applying a processing liquid for ink-jet recording to the recording medium, and,
making contact the recording liquid and the processing liquid on the recording medium to form an image,

wherein the processing liquid contains fine particles reactive with the coloring material when the processing liquid contacts with the recording liquid, and a water-soluble organic solvent having a boiling point of 210 °C or more, and
wherein the content (a wt %) of fine particles and the content (b wt %) of the water-soluble organic solvent having a boiling point of 210 °C or more satisfy the following relation:

$$10 \leq a < 40, b/a > 1.50.$$

18. Recorded matter comprising an image formed by means of ink,
wherein the ink is flocculated through contacting a recording liquid and a processing liquid for ink-jet recording,

the recording liquid comprises a coloring material and water,

the processing liquid for ink-jet recording comprises fine particles that react with the coloring material when the processing liquid contacts with the recording liquid, and a water-soluble organic solvent having a boiling point of 210 °C or more, and

the content (a wt %) of fine particles and the content (b wt %) of the water-soluble organic solvent having a boiling point of 210 °C or more satisfy the following relation:

$$10 \leq a < 40, b/a > 1.50.$$

**19.** A cartridge for ink-jet recording, comprising a processing liquid,

wherein the processing liquid comprises fine particles that react with a coloring material when the processing liquid contacts with a recording liquid that comprises the coloring material and water, and a water-soluble organic solvent having a boiling point of 210 °C or more, and

wherein the content (a wt %) of fine particles and the content (b wt %) of the water-soluble organic solvent having a boiling point of 210 °C or more satisfy the following relation:

$$10 \leq a < 40, b/a > 1.50.$$

**20.** A cartridge set for ink-jet recording, comprising a recording liquid cartridge and a processing liquid cartridge in combination,

wherein the recording liquid cartridge contains a recording liquid comprising a coloring material and water, and the processing liquid cartridge contains a processing liquid comprising fine particles that react with the coloring material when the processing liquid contacts with the recording liquid and a water-soluble organic solvent having a boiling point of 210 °C or more, and

the content (a wt %) of fine particles and the content (b wt %) of the water-soluble organic solvent having a boiling point of 210 °C or more satisfy the following relation:

$$10 \leq a < 40, b/a > 1.50.$$

**21.** An image forming apparatus for ink-jet recording, comprising a recording liquid cartridge and a processing liquid cartridge,

wherein the recording liquid cartridge contains a recording liquid comprising a coloring material and water, and the processing liquid cartridge contains a processing liquid comprising fine particles that react with the coloring material when the processing liquid contacts with the recording liquid and a water-soluble organic solvent having a boiling point of 210 °C or more,

the content (a wt %) of fine particles and the content (b wt %) of the water-soluble organic solvent having a boiling point of 210 °C or more satisfy the following relation:

$$10 \leq a < 40, b/a > 1.50$$

wherein the image forming apparatus is further equipped with an ejecting device configured to apply the recording liquid to a recording medium by communicating with the recording cartridge, and an ejecting device configured to apply the processing liquid to the recording medium by communicating with the processing cartridge, and an image is formed through contacting the recording liquid and the processing liquid on the recording medium.

FIG. 1

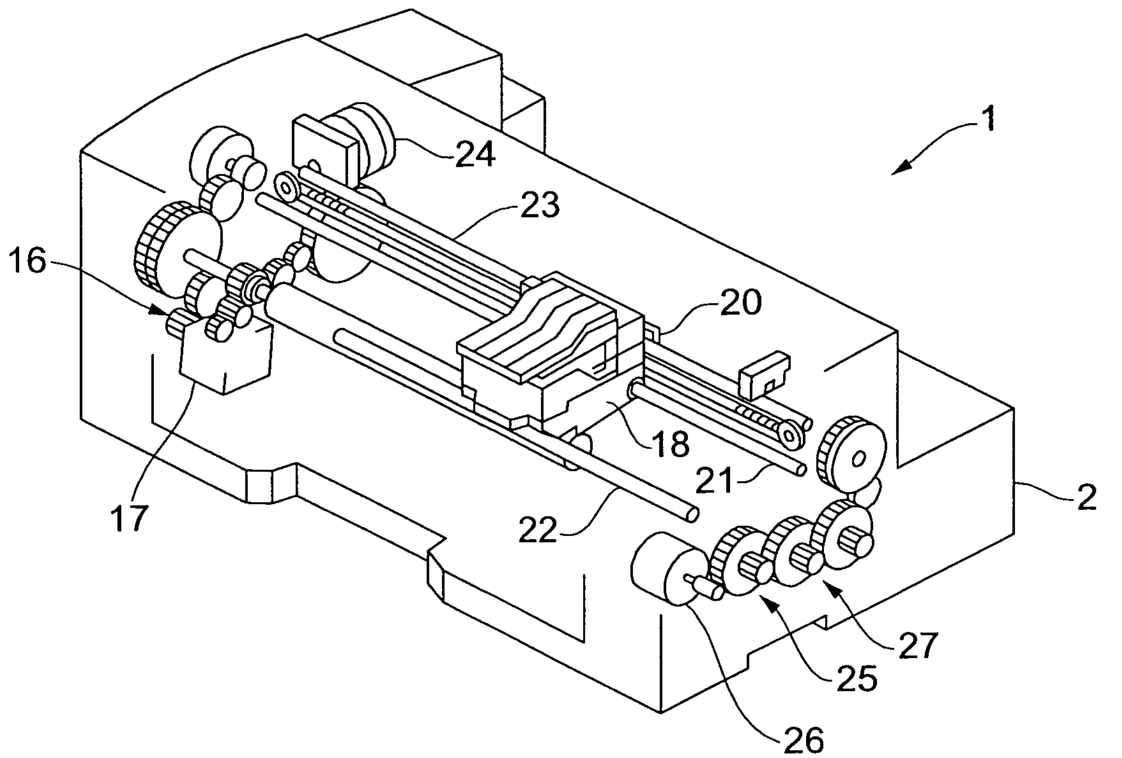

FIG. 2

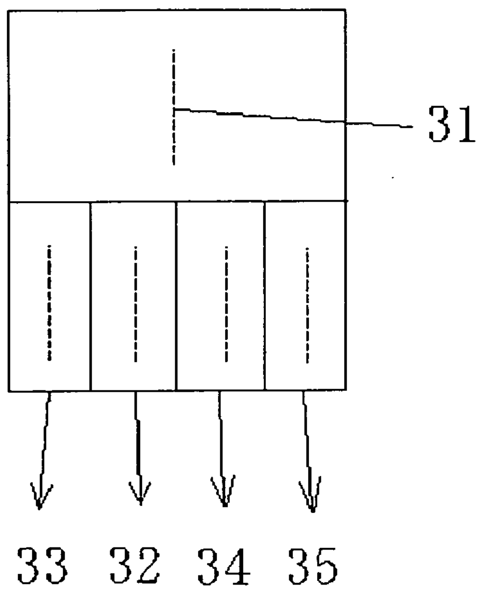

FIG. 3

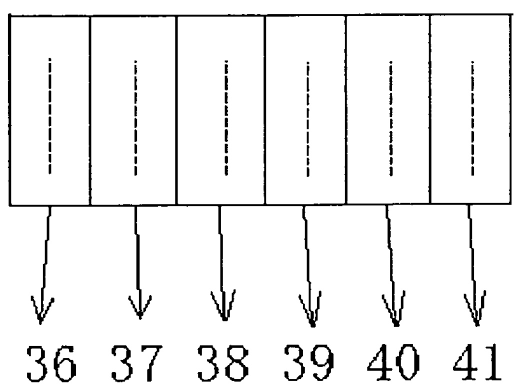

FIG. 4

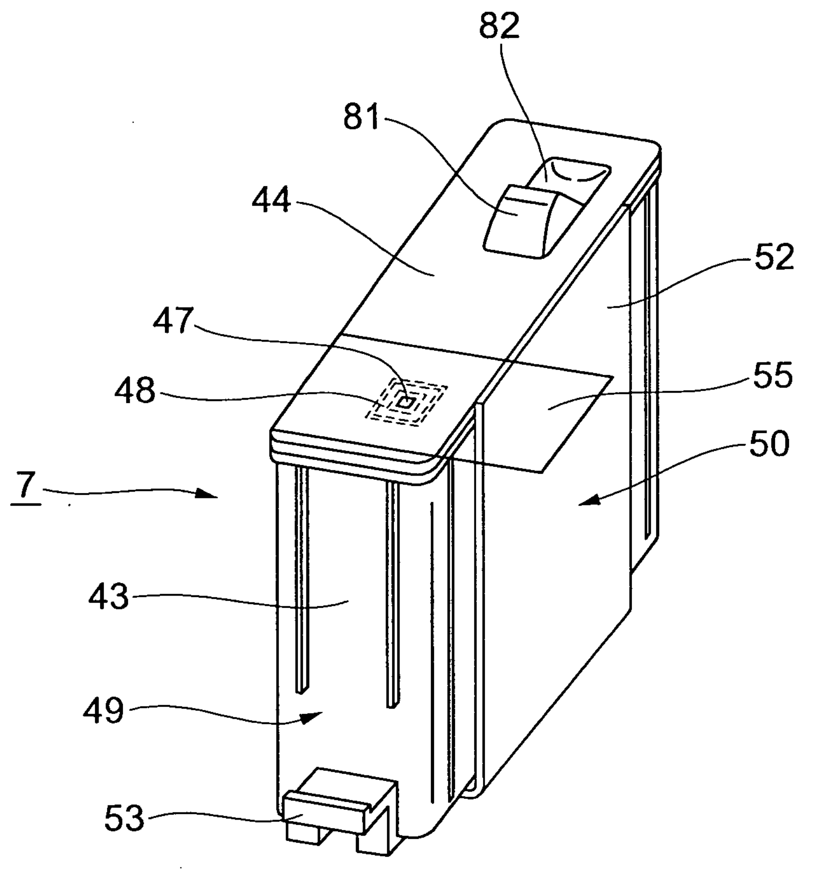

FIG. 5

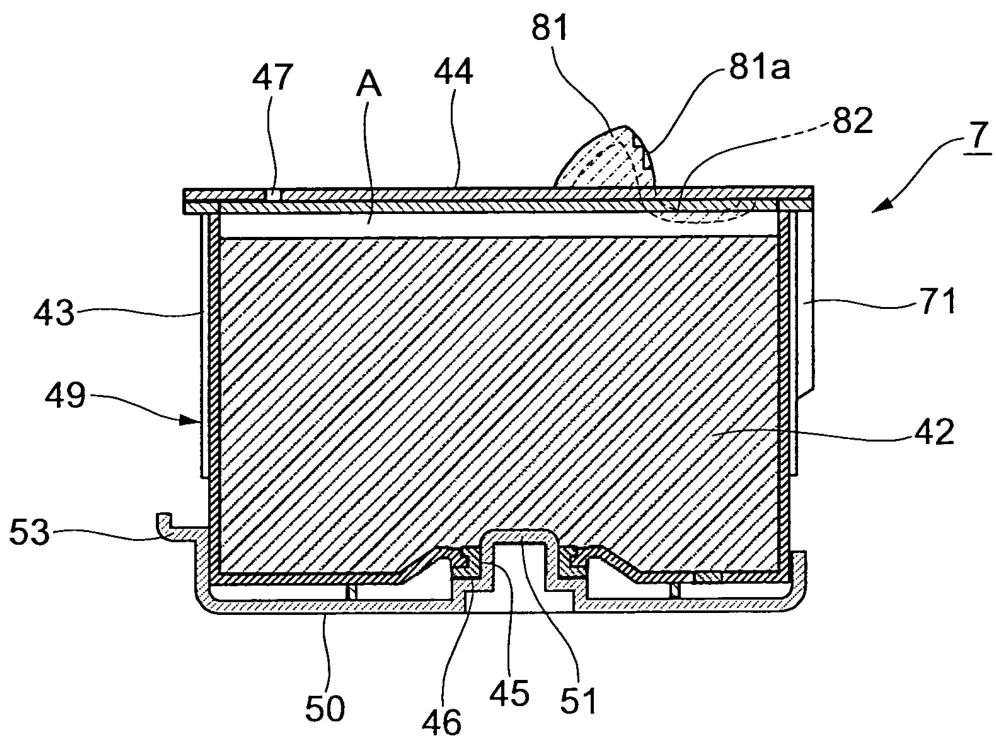

**INTERNATIONAL SEARCH REPORT**

International application No.
PCT/JP03/06380

A. CLASSIFICATION OF SUBJECT MATTER
Int.Cl$^7$ B41M5/00, C09D11/00, B41J2/01

According to International Patent Classification (IPC) or to both national classification and IPC

B. FIELDS SEARCHED

Minimum documentation searched (classification system followed by classification symbols)
Int.Cl$^7$ B41M5/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2003 |
| Kokai Jitsuyo Shinan Koho | 1971-2003 | Toroku Jitsuyo Shinan Koho | 1994-2003 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | EP 887391 A1 (SEIKO EPSON CORP.),<br>30 December, 1998 (30.12.98),<br>Page 11, line 20 to page 12, line 54; example B<br>& US 6039796 A & JP 11-10856 A | 1-3,5,6,9<br>4,7,8 |
| Y | EP 892024 A1 (SEIKO EPSON CORP.),<br>20 January, 1999 (20.01.99),<br>Page 6, line 11 to page 7, line 48<br>& DE 69808564 E & JP 11-78212 A | 7,8 |
| Y | EP 1099731 A2 (CANON KABUSHIKI KAISHA),<br>16 May, 2001 (16.05.01),<br>Par. Nos. [0090] to [0109], [0195] to [0196]<br>& JP 2001-199149 A | 4,7 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>20 August, 2003 (20.08.03) | Date of mailing of the international search report<br>09 September, 2003 (09.09.03) |
| Name and mailing address of the ISA/<br>Japanese Patent Office<br>Facsimile No. | Authorized officer<br><br>Telephone No. |

Form PCT/ISA/210 (second sheet) (July 1998)

**INTERNATIONAL SEARCH REPORT**

International application No.
PCT/JP03/06380

C (Continuation). DOCUMENTS CONSIDERED TO BE RELEVANT

| Category* | Citation of document, with indication, where appropriate, of the relevant passages | Relevant to claim No. |
|---|---|---|
| Y | EP 1099732 A1 (CANON KABUSHIKI KAISHA), 16 May, 2001 (16.05.01), Par. Nos. [0078] to [0099], [0193] to [0194] & US 6460989 B1 & JP 2001-199150 A | 4,7 |

Form PCT/ISA/210 (continuation of second sheet) (July 1998)

**INTERNATIONAL SEARCH REPORT**

International application No.
PCT/JP03/06380

**Box I Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box II Observations where unity of invention is lacking (Continuation of item 3 of first sheet)**

This International Searching Authority found multiple inventions in this international application, as follows:

(See extra sheets)

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.: 1-9

**Remark on Protest** ☐ The additional search fees were accompanied by the applicant's protest.
☐ No protest accompanied the payment of additional search fees.

Form PCT/ISA/210 (continuation of first sheet (1)) (July 1998)

**INTERNATIONAL SEARCH REPORT**

International application No.
PCT/JP03/06380

Continuation of Box No. II of continuation of first sheet(1)

1. Claim 1 claims an invention relating to a processing liquid for ink jet recording, comprising fine particles, which when brought into contact with a recording liquid comprising a coloring material and water, react with the coloring material, and a water-soluble organic solvent of 210°C or higher boiling point, wherein the fine particles and the water-soluble organic solvent of 210°C or higher boiling point are contained in proportion (a wt.%) and proportion (b wt.%), respectively, these proportions satisfying the relationships (relationship formulae not shown).
Claims 2 to 9 basically claim an invention referring to claim 1.

2. Claim 10 claims an invention relating to an ink set for ink jet recording, comprising a recording liquid comprising a coloring material and water and a processing liquid for ink jet recording, the processing liquid for ink jet recording comprising fine particles, which when brought into contact with the recording liquid, react with the coloring material, and a water-soluble organic solvent of 210°C or higher boiling point, wherein the fine particles and the water-soluble organic solvent of 210°C or higher boiling point are contained in proportion (a wt.%) and proportion (b wt.%), respectively, these proportions satisfying the relationships (relationship formulae not shown).
Claims 11 to 16 basically claim an invention referring to claim 10.

3. Claim 17 claims an invention relating to a method of forming ink jet recording images, comprising the steps of applying a recording liquid comprising a coloring material and water to a recording medium and further applying to the recording medium a processing liquid for ink jet recording comprising fine particles, which when brought into contact with the recording liquid, react with the coloring material, and a water-soluble organic solvent of 210°C or higher boiling point, wherein the fine particles and the water-soluble organic solvent of 210°C or higher boiling point are contained in proportion (a wt.%) and proportion (b wt.%), respectively, these proportions satisfying the relationships (relationship formulae not shown), so that the recording liquid and the processing liquid are brought into contact with each other on the recording medium to thereby form images..

4. Claim 18 claims an invention relating to a record composed of images of ink resulting from contact of a recording liquid with a processing liquid for ink jet recording and coagulation thereof, the recording liquid comprising a coloring material and water, the processing liquid for ink jet recording comprising fine particles, which when brought into contact with the recording liquid, react with the coloring material and a water-soluble organic solvent of 210°C or higher boiling point, wherein the fine particles and the water-soluble organic solvent of 210°C or higher boiling point are contained in proportion (a wt.%) and proportion (b wt.%), respectively, these proportions satisfying the relationships (relationship formulae not shown).

5. Claim 19 claims an invention relating to a cartridge of processing liquid for ink jet recording, comprising a cartridge having a processing liquid for ink jet recording filled therein, the processing liquid for ink jet recording comprising fine particles, which when brought into contact with a recording liquid comprising a coloring material and water, react with the coloring material, and a water-soluble organic solvent
(continued to the next extra sheet)

Form PCT/ISA/210 (extra sheet) (July 1998)

**INTERNATIONAL SEARCH REPORT**

International application No.
PCT/JP03/06380

Continuation of Box No. II of continuation of first sheet(1)

of 210°C or higher boiling point, wherein the fine particles and the water-soluble organic solvent of 210°C or higher boiling point are contained in proportion (a wt.%) and proportion (b wt.%), respectively, these proportions satisfying the relationships (relationship formulae not shown).

6. Claim 20 claims an invention relating to a cartridge set for ink jet recording, comprising a combination of a recording liquid cartridge having a recording liquid filled therein and a processing liquid cartridge having a processing liquid for ink jet recording filled therein, the recording liquid comprising a coloring material and water, the processing liquid for ink jet recording comprising fine particles, which when brought into contact with the recording liquid, react with the coloring material, and a water-soluble organic solvent of 210°C or higher boiling point, wherein the fine particles and the water-soluble organic solvent of 210°C or higher boiling point are contained in proportion (a wt.%) and proportion (b wt.%), respectively, these proportions satisfying the relationships (relationship formulae not shown).

7. Claim 21 claims an invention relating to an apparatus for forming ink jet recording images, comprising a recording liquid cartridge having a recording liquid filled therein, the recording liquid comprising a coloring material and water; a processing liquid cartridge having a processing liquid for ink jet recording filled therein, the processing liquid for ink jet recording comprising fine particles, which when brought into contact with the recording liquid, react with the coloring material, and a water-soluble organic solvent of 210°C or higher boiling point, wherein the fine particles and the water-soluble organic solvent of 210°C or higher boiling point are contained in proportion (a wt.%) and proportion (b wt.%), respectively, these proportions satisfying the relationships (relationship formulae not shown); a first discharge device communicating with the recording liquid cartridge and capable of applying the recording liquid to a transfer material; and a second discharge device communicating with the processing liquid cartridge and capable of applying the processing liquid to a recording material, so that the recording liquid and the processing liquid are brought into contact with each other on the recording material to thereby form images.

With respect to the inventions (group) of items 1. to 7. above, the "processing liquid for ink jet recording that satisfies specified conditions" as special technical feature within the meaning of PCT Rule 13.2 is identical with a known processing liquid as apparent from EP 887391 A1 (SEIKO EPSON CORPORATION). Consequently, the above inventions (group) do not constitute a group of inventions linked so as to form a single general inventive concept.

Therefore, the above inventions (group) are not related with each other so as to satisfy the requirement of unity of invention.